# EUROPEAN PATENT SPECIFICATION

(11) **EP 2 609 290 B1**
(45) Date of publication and mention of the grant of the patent: **24.04.2024**
(21) Application number: 11752165.8
(22) Date of filing: 23.08.2011
(51) Int. Cl.: E21C 35/183

(54) **BONDING OF A SUPER-HARD WEAR PART TO A TOOL COMPONENT**
KLEBEN EINES EXTREM HARTEN VERSCHLEISSTEILS AN EINE WERKZEUGKOMPONENTE
PIÈCE D'USURE

(30) Priority: 24.08.2010 US 376557 P; 24.08.2010 GB 201014059
(43) Date of publication of application: 03.07.2013
(73) Proprietor: Element Six Abrasives Holdings Limited, London EC1N 6RA (GB)
(72) Inventor: TANK, Klaus, 1559 Springs (ZA); WAI, Siu-Wah, 1559 Springs (ZA); VAN STADEN, Louise Frances, 1559 Springs (ZA)
(74) Representative: Brack, Paul
(86) International application number: PCT/EP2011/064444
(87) International publication number: WO 2012/025516

(56) References cited:
- DE-A1- 3 005 684
- GB-A- 981 899
- JP-A- 4 213 691
- JP-A- 56 062 735
- JP-A- 2010 023 146
- US-A- 3 645 331
- US-A- 4 323 130
- US-A- 4 453 775
- US-A- 4 794 894
- US-A- 6 068 070
- US-A1- 2003 011 236
- US-A1- 2009 236 147

## Description

This invention relates generally to a tool component comprising a wear part covered at least in part by a connection member, the wear part comprising a superhard material, or a ceramic material, or a cermet material, or a composite of a ceramic and a superhard material or a composite of a cermet and a superhard material, and the connection member comprising a metal or alloy. The invention also relates to a method of securing such a wear part to such a connection member. The tool component may, in certain examples be used within a tool body, the connection member being used as an intermediate member to join the wear part to the tool body. The invention also relates generally to a segmented tool component comprising two or more tool components of the type described above secured to each other by their respective connection members.

A wear part typically provides the working portion of a tool; it is that part of the tool that is generally exposed in operation to abrasive action.

As used herein, a "ceramic" material is an inorganic solid that is non-metallic in character, although it may include metal elements, particularly in compound form. Non-exhaustive examples of ceramic materials are silicon carbide, silicon nitride, titanium carbide, aluminium oxide, zirconium oxide, tantalum carbide, alumina and polycrystalline cubic boron nitride (PCBN).

A cermet is a composite material composed of ceramic and metallic materials.

As examples of superhard materials, there may be mentioned diamond, ceramic diamond composite materials comprising SiC and diamond and referred to hereinafter as SCD material, including low pressure SCD and high pressure SCD known as Syndax^{™}, cubic boron nitride (cBN), polycrystalline diamond (PCD) and polycrystalline cubic boron nitride (PCBN) material. US 6,447,852 and US 6,709,747 disclose a type of SCD composite material comprising SiC and diamond and a method for making same. Applications of SCD material are as diverse as the thermal management of electronic devices, and wear applications such as nozzles for fluid, e.g. water-jets, inserts for rock drilling bits, mechanical seals and bearings.

Superhard materials, ceramics, cermets, and composites thereof, making up the wear part of the present invention, are hard, wear resistant materials, and consequently are difficult to machine or further process/finish accurately and to tight tolerances, and/or to a polished surface finish. Indeed these hard, wear resistant materials may frequently be manufactured in near net size and shape so that machining finishing operations are not required. The materials are also typically difficult to wet, typically difficult to braze, and may also be brittle. These properties make the inclusion of these materials into tool components difficult and expensive. The machining and/or finishing difficulties make it difficult and expensive for parts made of these hard materials to be made to fit into existing tool bodies where tolerance specifications are very precise. The wetting difficulties make the materials difficult to braze, weld or solder, and the brittle nature of some of the materials makes shrink fitting inappropriate. In addition where materials are thermally unstable this also rules out high temperature joining techniques such as welding.

In use, wear parts are typically included as inserts within tools. As examples of tools in which wear parts may be included there may be mentioned cutting or drilling tools, bearings, nozzles and the like. The part of the tool to which the wear part is secured may typically comprise, for example a metal or an alloy or a polymeric material. Where the wear part comprises a ceramic material, a cermet, a superhard material, a composite of a ceramic and a superhard material, or a composite of a cermet and a superhard material, securement of that wear part to another part which comprises a material that is different from the material of the wear part is not straightforward. Ceramic materials, cermets, superhard materials, and composites of superhard material and ceramics, for example the above-mentioned SCD material, have poor wettability and cannot be readily joined to metals or alloys by techniques such as welding, brazing, or soldering. Furthermore ceramics, cermets, superhard material and composites thereof are frequently brittle, making the use of shrink fitment within another member undesirable, since such a shrink fitment might cause fracture of the ceramic or superhard material or composite thereof. While adhesives may be used for bonding to ceramics, cermets, superhard materials and composites thereof at moderate temperatures, at high temperatures, for example at or above 250°C, 300°C, 350°C, or even 400°C, such as experienced during many tool operations, most adhesive bonds will break down.

WO2009/010934 describes a method for joining a SCD (silicon carbide cemented diamond) composite part to a tungsten carbide tool, the method comprising treating the SCD part first with acids to roughen the join surface and to remove any graphite present at the join surface, then applying a titanium carbide layer, a subsequent tungsten metal layer and then an oxidation resistant silver layer, and brazing the silver layer to the tungsten carbide tool using conventional braze alloy thereby securing the SCD part into the tungsten carbide tool.

US 7673785 (Sandvik) describes a cutting pick as used in machinery for mechanical rock excavation comprising a cutting tip made of silicon carbide diamond composite (referred to as SiC-D in US 7673785), and a cutting-tip-holder or pick-body comprising metal having a greater coefficient of thermal expansion than the SiC-D cutting tip. The base of the SiC-D cutting tip may be electroplated with a copper coating, and a solder or braze is included between the copper coating and the metallic pick body. The part is heated to effect the braze, or melt the solder, and the metallic pick body employs the difference in thermal expansion between it and the SiC-D cutting tip to exert pressure to fix the cutting tip to the pick body.

Japanese patent application publication no. 2010023146 is directed to a cemented carbide tool in which a cemented carbide chip is shrinkage fitted to a cylindrical retaining member made of steel. Recession/projection parts are formed on the outer peripheral part of the cemented carbide chip and some parts of the retaining member are plastically deformed and engage with the recession/projection parts.

Japanese patent publication no. 56062735 is directed to the manufacture of a tool through cold processing to join the cutting edge member and base body.

US 4794894 is directed to a ceramic tipped pivot rod and discloses a tool component including a wear part that is covered at least in part by a connection member, the wear part having a hardness of at least 15 GPa, and the connection member) comprises a metal or alloy, the connection member having a hardness less than 15 GPa, the connection member being in the form of a sheet or being a cylindrical part, and the connection member providing a layer over at least part of the wear part; at least part of the connection member having been pressed against at least part of the surface of the wear part such that a surface of the connection member that faces a surface of the wear part follows the profile of the said part of the surface of the wear part against which it has been pressed, whereby the surfaces of the wear part and the connection member are co-operatively shaped such that relative movement between the two parts is substantially prevented at least during operation of the tool component; and wherein not only the surface of the connection member that faces the wear part follows the profile of the wear part but also the opposed surface of the connection member. The wear part is disclosed as being formed of ceramic material.

### Summary of the invention

The invention is defined by the appended claims 1 to 11.

### Brief description

There is provided a tool component comprising a wear part that is covered at least in part by a connection member, the wear part having a hardness of at least 15 GPa, and the connection member being made from a metal or alloy, having a hardness less than 15 GPa, the connection member being in the form of a sheet or being a cylindrical part and the connection member providing a layer over at least part of the wear part, at least part of the connection member having been pressed against at least part of the surface of the wear part such that a surface of the connection member that faces a surface of the wear part follows the profile of the said part of the surface of the wear part against which it has been pressed, whereby the surfaces of the wear part and the connection member are co-operatively shaped such that relative movement between the two parts is substantially prevented at least during operation of the tool component; and wherein not only the surface of the connection member that faces the wear part follows the profile of the wear part but also the opposed surface of the connection member. The ratio of the thickness of the connection member to the thickness of the wear part underlying it measured at any point being at most 1:10; wherein the wear part is substantially cylindrical, the wear part comprising a surface that includes one or more depressions therein, the one or more depressions comprising one or more annular grooves extending around the substantially cylindrical wear part; wherein at least part of the connection member having been pressed against at least a part of the surface of the wear part that includes the one or more depressions therein; and wherein the wear part comprises a ceramic material, a cermet material , or a superhard material or a composite of a ceramic and a superhard material, or a cermet and a superhard material.

The connection member provides a layer over at least part of the wear part. The connection member is in the form of a sheet, for example a wrapped sheet, or in the form of a cylindrical part. Where the connection member is in the form of a cylindrical part that cylinder may be, for example, a hollow cylindrical part open at both ends, or closed at one end. Typically the connection member may envelop or surround at least part of the wear part. The connection member may form a sheath around at least part of the wear part.

The connection member which provides a layer over at least part of the wear part may be substantially uniform in thickness across its extent, or may vary in thickness across its extent.

The connection member provides a layer over at least part of the wear part, and the ratio of the thickness of the connection member to the thickness of the wear part underlying it measured at any point is at most 1:10. By this terminology we mean that in a cross- sectional view taken through the wear part and overlying connection member at any point on the connection member, drawing a line perpendicular to the connection member (or to a tangent to the connection member if curved) the ratio of the thickness of the connection member to the thickness of the wear part measured along that line is at most 1:10. The thickness of the connection member is thinner relative to that of the wear part. For example the above mentioned ratio of the connection member to the thickness of the wear part may be at most 1:15, or at most 1:20, or at most 1:40. Where the wear part is a hollow part, for example an annulus, the thickness of the wear part is the thickness of the annulus wall from its outer periphery to its inner periphery. Where the wear part is solid, for example a solid cylinder that may be encased for example by a cylindrical connection member, the thickness of the wear part is the diameter of the cylinder. Where the wear part is substantially solid, for example as in a cylindrical nozzle where the passageway through the nozzle is very small compared to the thickness of the nozzle walls then the thickness of the wear part may be considered to be the overall diameter of the nozzle.

The wear part comprises a surface that includes one or more depressions therein, and at least part of the connection member has been pressed against at least part of the surface of the wear part that includes the depressions. Generally the connection member is pressed into direct contact with the wear part. It is also possible for there to be an intervening layer between the connection member and the wear part.

In the tool component, at least part of the connection member has been pressed against at least part of the surface of the wear part that includes the depressions. The pressing may be achieved by an externally applied pressing force, or by an internal drawing force. A number of methods may be mentioned as suitable for pressing the connection member against the wear part. These include isostatic pressing, mechanical deep drawing in a flexible mould, metal-spinning, or shrink fitting. In general shrink fitting processes which are usually achieved by heating or cooling one component before assembly and allowing it to return to the ambient temperature after assembly apply considerable stresses to the underlying component, but such stresses are minimised if shrink fitting is used in the present arrangement because of the relative thinness of the connection member relative to the wear part onto which it is pressed.

The maximum thickness of the connection member may be 6 mm for some examples. In other examples it may be even thinner, for example a maximum thickness of 4 mm, 2 mm, 1 mm, 0.8 mm, 0.5 mm or 0.3 mm. For various examples a preferred thickness is about 0.2 mm. For some examples the minimum thickness of the connection member is 0.01 mm. Other minimum thicknesses may be 0.03 mm, or 0.05 mm, or 0.1 mm.

The wear part against which the connection member is pressed, particularly where the connection member has a maximum thickness of 0.8 mm or less, may for some examples be at least 8 mm thick or at least 9 mm thick, or for some examples at least 15 mm thick.

In the tool component at least part of the connection member has been pressed against at least part of the surface of the wear part that includes the depressions, such that a surface of the connection member that faces a surface of the wear part follows the shape of the profile of the said part of the surface of the wear part against which it has been pressed. Not only the surface of the connection member that faces a surface of the wear part, but also the opposed surface of the connection member follows the profile of the surface of the wear part as a result of the pressing operation. As an example where a connection member surrounds a wear part where both surfaces of the connection member follow the outer profile of the wear part then the outer surface and the inner surface of the connection member will follow the shape of the profile (including any grooves or depressions) in the outer surface of the wear part. Similarly where the connection member is within the wear part its inner and outer surfaces follow the profile (including any grooves or depressions in the inner surface of the wear part. Also as examples, for an isostatic pressing process, particularly given the relative or absolute thinness of the connection member, both surfaces of the connection member will typically follow the profile of the wear part after the pressing process. The same typically applies in a spinning or deep drawing process. In some examples the connection member has a substantially uniform thickness over that part of the wear part with the projections and/or depressions in them, with both inner and outer surfaces of the connection member following the profile of the wear part.

In some examples the wear part may have a hardness of at least 20 GPa, or at least 25 GPa.

The term tool component as used in this specification refers to a component that in operation will be used adjacent to at least one other part of a tool. For example the tool component of the present invention may be fitted within, around, or to one side of a tool body. The connection member of the tool component of the invention serves as an intermediate member to bond the wear part (which comprises a material which as previously described is typically very difficult to bond to other materials such as metals, alloys, carbides, polymers and the like) to a tool body (which typically comprises one or more of those materials). The tool component of the invention may be fitted within another body, around another body or to one side of another body for example.

When we say the wear part and connection member surfaces are co-operatively shaped substantially to prevent relative movement between the two parts during operation of the wear part we mean they are shaped so that any movement that would prevent proper operation of the wear part in use, and/or would damage the wear part or the tool body is substantially prevented.

The co-operating shaped parts may exert no or a small force on each other. There is no significant force between the parts as would be the case in a typical shrink fit example in which the thickness of a shrink fit member is a considerable percentage of the part onto which it is to be shrunk. In shrink fit applications one part (an outer part) is typically manufactured to have an inner diameter (or other dimension if not circular in cross section) that is smaller than the outer diameter of an other (inner) part. The outer part is then heated so that it expands, and now has an inner diameter greater than the outer diameter of the inner part, positioned over the inner part and allowed to cool and revert to its previous dimensions. There is then an interference fit between the two parts, the magnitude of that interference fit depending on the difference in the dimensions of the two parts. In certain examples of the invention where the tool component is fitted into a tool body there is no interference fit between the tool component and the tool body. Typically there will be a clearance between the tool component and the tool body, for example a clearance up to 0.5 mm, for example up to 0.4 mm or up to 0.3 mm.

As noted the wear part of the tool component of the present invention comprises a superhard material, or a ceramic material, or a cermet, or a composite of a ceramic and a superhard material or a composite of a cermet and a superhard material. For some examples a preferred ceramic/superhard composite is the aforementioned SCD material comprising diamond in a matrix of silicon carbide.

SCD material, in common with many ceramics and superhard materials, is not only hard and difficult to machine, but also is difficult to join. It is not easily wetted by braze alloys even under vacuum conditions It has been noted, for example, in US 7673785 that silicon carbide-diamond composite material is very difficult to bond to steel by normal brazing and soldering techniques, and that one explanation for this difficulty is that silicon carbide diamond composite has a high carbon content which significantly reduces the ability of braze to bond to it. In addition, it is generally hard and brittle and thus cannot be mechanically attached using bolts, rivets or the like.

SCD material and many other ceramics and superhard materials also has poor fracture toughness. As such techniques that involve shrink fitment around the SCD (or similar materials) are not suitable for joining to SCD (or similarly brittle materials). SCD has a K_{IC} plane strain fracture toughness of about 4-6 MPa·m^{1/2}. The connection method described in the present invention is particularly suitable for materials having a K_{IC} plane strain fracture toughness less than 13, or less than 10, or less than 8, or less than 6 MPa·m^{1/2}. Tool components of the invention may have a wear part having a K_{IC} plane strain fracture toughness less than 13, or less than 10, or less than 8, or less than 6 MPa·m^{1/2}.

SCD material may be made by a method involving providing a mixture of diamond particles, generating a green body by mixing the particles with an appropriate binder and pressing, burning off the binder to form a brown body, then infiltrating with silicon and reaction sintering to form in situ silicon carbide. The silicon is typically positioned adjacent the brown body for silicon infiltration.

The connection member comprises a metal or an alloy. As examples of suitable metals and alloys there may be mentioned cemented carbide, copper, iron, nickel, molybdenum, or alloys, including steels.

The two parts of the tool component of the present invention are the wear part and the connection member. These may be located relative to each other in a variety of ways. For example, the connection member may surround at least part of the wear part, or may be on an inner surface of the wear part, or to one side of the wear part, or any combination of these possibilities.

The wear part and the connection member are co-operatively shaped substantially to prevent relative movement between the two parts, at least during operation of the wear part, and optionally also when not in operation, i.e. at all times. To this end, the two parts have co-operating formations on their surfaces, namely depressions and/or upstanding projections on their surfaces. For example the parts may have co-operatingly shaped depressions, upstanding-dimples or nipples, grooves, ridges, cross-shaped depressions or ridges, one or more angled grooves, i.e. grooves at an angle to the circumferential direction, helical screw thread type projections or grooves, or the like. Such formations extending from the surfaces may be convex or concave in shape, or a combination thereof. Co-operation of such shaped surfaces is for these examples the means by which relative movement between the said wear part and said connection member is substantially prevented, at least during operation or use of the wear part. The formations may be any suitable height /depth, and any suitable width, e.g. each or either of these dimensions may be at least 0.05 mm or at least 0.1 mm, or at least 0.15 mm, or at least 0.2 mm, or at lest 0.3 mm, or at least 0.4 mm, or at least 0.5 mm, or at least 0.75 mm, or at least 1 mm, or at least 1.25 mm, or at least 1.5 mm, or at least 1.75 mm, or at least 2 mm.

In addition to the co-operating depressions on the wear part and connecting member which serve to prevent relative movement between those parts, the overall shape of the wear part and connection member may also be co-operatively shaped, e.g. with abutting flanges e.g. step flanges, substantially to prevent movement of one part relative to the other part in at least one direction, with relative movement between the two parts in an opposed direction in some examples being substantially prevented during operation by a force that acts on one or both of the wear part and the connection member during operation of the wear part, for example fluid flowing through a nozzle.

Any combination of the above mentioned co-operating shapes may also be used.

The connection member provides a layer on a part of a surface of the wear part. When it is in the form of a sheet it may be a wrapped sheet. It may be in the form of a general cup shape with a base and sides, that cup may have any shaped base, and the base may or may not have an opening therethrough. It may be in the form of a cylinder with a flange extending outwardly from one end thereof in the manner of a "top hat". These are all examples of configurations and others are also envisaged, provided the connection member provides a layer of appropriate thickness over the part of the wear part which carries depressions in the form of grooves therein and provided that the connection member is in the form of a sheet or is a cylindrical part. Where it is said that the connection members covers at least part of a surface of the wear part, this covering can be on an inner surface or an outer surface or be a side covering of the part, or a combination thereof.

The wear part may be solid or open or apertured in cross-section.

As noted above. the wear part is substantially cylindrical. The co-operating shaped surfaces of the wear part and connection member may be one or more annular grooves extending around the circumference of the cylindrical wear part and co-operatingly shaped connection member. The connection member may be substantially cup shaped, the base of the cup seating against the base of the wear part, and the sides of the cup extending at least part way up the wear part, and covering the said annular grooves in the wear part. The base of the wear part and the base of the covering cup-shaped connection member may also, or instead include co-operating formations, e.g. depressions or projections or the like that co-operate substantially to prevent relative rotation between the wear part and covering connection member.

The connection member may be formed adjacent to the wear part in any suitable manner. For example the connection member, for example a steel connection member, may be cold drawn or rolled into cup form. The cup may for example have a minimum wall thickness or 0.01 mm, or 0.03 mm, or 0.05 mm, or 0.1 mm and a maximum wall thickness of 6, 5, 4, 3, 2, 1 mm, or 0.5 mm or 0.3 mm. As an example a drawn steel cup may have a thickness of about 0.2 mm. These minimum and maximum thicknesses also apply to other examples of other shape connection members. The steel cup connection member may then be pressed, for example isostatically pressed, e.g. CIPed (cold isostatically pressed) or HIPed (hot isostatically pressed) against the wear part so as to follow the profile of that part. This wear part may be suitable for example as a mechanical pick. When so formed the isostatically pressed connection member moves towards the wear part to follow the profile of at least part of its surface. Both the inner and outer surfaces are deformed by the CIPing or HIPing process to follow the shape of the profile of the wear part. The isostatic pressing process puts the wear part under some compression, so that any possibility of fracture or cracking or the like is substantially avoided. Although the isostatic pressing process puts the wear part under compression, this is much smaller than the forces that would be applied in the case of a standard shrink fitment process onto the wear part especially where as is typical for shrink fitment relatively thick shrink parts are used, The compression on the wear part resulting from the isostatic pressing, and also from any subsequent braze or the like, of the connection member to a tool body may be advantageous for materials which have a higher compressive strength than tensile strength. SCD material is an example of a material that typically has a higher compressive strength than tensile strength. The connection member (typically a steel cup) can be brazed or similar to an adjacent metal tool body. The braze may have an appropriate thickness to take up any space between the wear part and the adjacent metal part. Thus again this invention provides advantages over prior art attachment methods such as standard shrink fitment since the variation in braze alloy thickness allows a dimensional tolerance in the dimensions of the wear part. The variation in braze alloy thickness also provides a relaxed tolerance to accommodate surface unevenness or roughness of the wear part. This advantageously means that machining of manufactured parts with uneven or rough surfaces may be eliminated, or at least reduced or minimised.

An advantage of the co-operating shaped fitment of the connection member to the wear part is that it secures the two parts together. Therefore it enables the connection member to be secured, or mechanically locked, to a wear part that consists of a material that cannot otherwise be readily secured, e.g. welded, soldered, brazed, shrunk fit, or mechanically attached by methods such as bolting, riveting or the like. Ceramics and superhard materials and composites thereof fit into this category of materials that are not readily bonded to many other materials, and which sometimes being brittle may not be suitable for shrink fitment attachments. The two part tool component (wear part plus connection member) may then, by appropriate choice of the material for the connection member (e.g. metal, alloy,) be readily bonded within another part such as a tool part, since the connection member is itself readily bondable to the other part, e.g. by welding, brazing or soldering if appropriate, or may be readily secured by mechanical means such as bolting, riveting or the like.

The connection member thus, in being itself mechanically fitted to the wear part, serves as an intermediate member to secure the wear part within a tool body or the like that comprises a material that is typically different to that of the wear part.

The connection member may be shaped to follow the profile of the wear part over at least 10% or at least 20% or at least 30% or at least 50% or at least 70% or at least 80% or at least 90% or at least 95% or at least 100% of the surface of the wear part.

There is also provided a tool comprising a tool component according to the invention secured within a tool body. The connection member of the tool component serves to connect the wear part of the tool component to the tool body. As an example, the tool of the invention may be pick-using machinery, the said wear part of the tool component being the wear resistant pick, and the tool body into which the pick is secured via a metal connection member being the pick body. In this case the connection member and the pick body each comprise a metal or an alloy, and the connection member is fixed to the tool body by welding, brazing or soldering. As another example the tool may comprise drilling or cutting equipment, for example a roller cone drill bit, the wear part of the insert according to the invention providing a bearing within the drilling or cutting equipment and the connection member typically being a metal or alloy that may be joined by welding, brazing or soldering to the drilling or cutting equipment, e.g. to a journal surface of the roller cone drill bit. As a further example the tool may comprise a nozzle, the tool component of the invention providing a nozzle insert, the wear part of the insert according to the invention providing the wear resistant core to the nozzle insert which is exposed to the fluid passage, and the connection member providing a housing for that core, which housing may for example be made of a material more readily formed and/or machined to tighter tolerances than the material of the wear part.

In general tool components according to the invention may be used as cutting or drilling inserts, bearing, nozzle inserts, and in all manner of other wear parts.

As noted the wear parts of the tool components are substantially cylindrical wear parts which may include a wear part that may be in the shape of an annular ring. As before, this annular wear part and the connection member may comprise co-operating formations in their surfaces, e.g. each include one or more depressions, upstanding dimples, grooves ridges or the like, for example, one or more longitudinally extending grooves, for example in the radially outward, or inward, surface of the annular wear part, these longitudinally extending grooves extending part or the whole way along the length of the annular part. Helically extending grooves (e.g. as on a screw) are also possible in this and other examples. Where the wear part is annular in shape, the connection member may be similarly annular. The annular connection member may surround the annular wear part. As an alternative the annular wear part may surround the annular connection member. As another option the connection member may be only part annular, that is extend only part way around or within the annular wear part. Annular wear parts may for example have applications as bearings.

In each of the above examples the annular connection member may comprise one or more flanges extending over at least part of one or both of the end surfaces of the annular wear part. Such flanges substantially prevent longitudinal movement of the wear part relative to the connection member in the direction of the flange. One convenient means to incorporate such a flange on a connection member over an annular wear part is to form a cup shaped connection member over the annular wear part, e.g. to form a metallic cup shape by metal drawing, the cup base resting against an end face of the annular wear part, and the sides of the cup extending at least part way, optionally the whole way up the curved outer annular surface of the wear part , and then to punch a hole in the base of the drawn cup to correspond to the "hole" of the annular wear part. The remaining part of the cup base provides a flange on one end face of the annular wear part thereby substantially preventing longitudinal movement in that direction. Optionally a second flange may be incorporated on the second end face of the annular wear part. This may conveniently be achieved by forming a second cup-shaped connection member over the annular wear part covered by the first cup-shape connection member; the base of the second cup is positioned adjacent the uncovered end face of the annular wear part, and the sides of the cup extending over the sides of the first cup shaped connection member. The cup may as before be formed conveniently by a metal drawing technique. This second cup thus provides a second flange on the opposite end face of the annular wear part, and longitudinal movement between the parts in both longitudinal directions is substantially prevented. In one direction movement is substantially prevented by the flange on the first connection member, and in the opposed direction relative movement is substantially prevented by the flange on the second connection member.
(i)The flanges of the connection member extending over the flat end faces of the annular wear parts and/or (ii) the end faces of the annular wear parts may be co-operatively shaped substantially to prevent relative movement between themselves during operation, for example containing co-operating recesses, upstanding dimples, grooves, ridges or the like. Such co-operatingly shaped flanges of the connection member and the end faces of the annular wear part may be in addition to, or instead of co-operatingly shaped parts on
the curved surfaces of the annular wear part and the annular or part annular connection member.

In some examples the tool component provides a nozzle insert, the wear part providing a core (central) component adjacent the fluid bore, the outer surface of that core component being provided with one or more depressions, and the connection member comprising a metal or alloy that may be metal drawn over the wear part or isostatically pressed to follow formations (projections or depressions) therein. The connecting member may then be brazed or the like to a metal housing shaped to correspond to that of the wear part nozzle core. The wear part es is substantially cylindrical in shape and in this example has an annular flange extending radially outward therefrom, the flange being adjacent the inlet end of the nozzle. The housing is correspondingly shaped to co-operate with the core shape. In these cases the mating depressions and projections formed by metal drawing the connection member onto the wear part core in addition to the flange end of the core against the housing, in combination with fluid flow act substantially to prevent relative longitudinal movement between the wear part nozzle core and the connection member.

There is also provided a method of making a tool component by joining (i) a wear part having a hardness of at least 15 GPa to (ii) a connection member comprising a metal or alloy having a hardness less than 15 GPa and being in the form of a sheet or being a cylindrical part; the joining being carried out by pressing the metal connection member against the wear part so that the connection member provides a layer over at least part of the wear part such that a surface of the connection member that faces a surface of the wear part follows the profile of the said part of the surface of the wear part against which it has been pressed, whereby the surfaces of the wear part and the connection member are co-operatively shaped such that relative movement between the two parts is substantially prevented at least during operation of the tool component; and wherein not only the surface of the connection member that faces the wear part follows the profile of the wear part but also the opposed surface of the connection member. The ratio of the thickness of the connection member to the thickness of the wear part underlying it measured at any point being at most 1:10; wherein the wear part is substantially cylindrical, the wear part comprising a surface that includes one or more depressions therein, the one or more depressions comprising one or more annular grooves extending around the substantially cylindrical wear part and wherein at least part of the connection member having been pressed against at least part of the surface of the wear part that includes the one or more depressions therein; and wherein the wear part comprises a ceramic material, a cermet material, or a composite of a ceramic and a superhard material , or a cermet and a superhard material.

In forming co-operating formations such as depressions from the surfaces of the wear part and connection member, grooves may be green machined into the part, for example for some SCD parts while that part is in its green state, prior to binder burn off and sintering. Other possible methods for SCD materials or other materials include grinding, EDM cutting, general cutting and the like.

The material of the connection member comprises a metal or alloy and may generally be chosen to be a metal or alloy that readily bondable, e.g. weldable, brazeable or solderable material, and the method may comprise joining, e.g. welding, brazing or soldering, friction welding or ultrasonic bonding the connection member to a tool body. The method may alternatively involve mechanically joining the connection member to a tool body, for example by bolting, riveting or the like. Flanges may be provided on the connection member which may be used for the mechanical securement.

The material of the connection member may be a material that is more ductile than the material of the wear part.

There is also provided a tool component arranged in segments, each segment comprising a wear part and a connection member arranged relative to each other in the manner defined hereinbefore, and the connection members of adjacent segments being secured to each other, thereby securing said wear parts of adjacent segments to each other.

The method of making a tool component further comprises making a tool component which is segmented, each segment comprising a wear part and a connection member arranged relative to each other in the manner defined hereinbefore, the method additionally comprising securing connection members of adjacent segments to each other, (for example by brazing, soldering, welding, mechanical means such as bolting, riveting or the like) thereby securing said wear parts of adjacent segments to each other.

The segmented tool component may be a nozzle in which the segments are arranged end to end along the axis of the nozzle, or arranged side by side around the axis of the nozzle.

The above mentioned examples allow a wear part to be extended, that is built up in segments. This may advantageously allow large, and/or specific designs of wear parts to be made.

### Examples

Embodiments of the invention will now be described, by way of example, with reference to the accompanying drawings, wherein:
Figure 1 is a side view, partly in section of a tool component according to the invention, the tool component being a pick (a wear part) in combination with a connection layer, and the tool component being inserted within a pick body, the wear part of the tool component being secured to the tool body by means of the connection member of the tool component with a braze layer;
Figure 2a is a perspective view of the pick shown in Figure 1;
Figure 2b is a perspective view or the tool component of Figure 1 2b showing the mechanical interlocking of the connection member with the pick;
Figure 2c is a partially sectioned view of the tool component of Figures 1 and Figure 2b secured within a tool body by means of a braze layer;
Figure 3 is a partly sectioned view showing an alternative example of a pick;
Figure 4a is a perspective view of a bearing and connection member for the bearing;
Figure 4b is a perspective view of the bearing and connection member of Figure 4a brazed to an optional second annular metal or alloy member (a mounting member);
Figure 4c is a plan sectional view of the bearing connection member and annular steel outer member of Figure 4b;
Figure 4d is a cross-sectional view taken along A-A f Figure 4c;
Figures 4e and 4f, 4g and 4h, 4i and 4j, 4k and 4l, 4m and 4n, 4o and 4p, 4q and 4r are for each pair of figures, plan and side view respectively of possible alternative profiles to that shown in Figures 4a to 4d as examples for bearings, mechanical seals, picks and nozzles etc;
Figure 5a is a perspective view of an inside-out version of the bearing of Figures 4a to 4d;
Figure 5b shows the bearing of Figure 5a in plan sectional view, with an optional second annular metal or alloy member (mounting member) shown to the right side of the Figure;
Figure 5c is a cross sectional view through the left option of Figure 5b, without the optional second annular metal or alloy member (mounting member);
Figure 5d is a cross sectional view through the right option of Figure 5b, with optional second annular metal or alloy member (mounting member) in place;
Figure 6 is a side sectional view of two bearings similar to Figure 4a-4d, one of relatively large diameter, and the other of a relatively smaller diameter;
Figure 7 is a side sectional view through two bearings of the type shown in Figure 5a to 5d;
Figure 8a is an end view of a plurality of SCD wear parts in a thrust bearing mounted in a ring around a metal housing part;
Figure 8b is a sectional view taken along line B-B of Figure 8a;
Figure 8c is an enlarged sectional view of the circled portion of Figure 8b;
Figure 9 is a side sectional view of a nozzle insert that is included for illustration purposes only and is not considered an example or embodiment of the invention;
Figure 10 is a side sectional view of a nozzle inserts according to the invention;
Figure 11 is a cross sectional view through a mechanical seal arrangement showing two tool components according to the invention held within respective tool holders and arranged to be urged against each other; Fig. 11 is included for illustration purposes only and is not considered an example or embodiment of the invention;
Figure 12 is an enlarged sectional view through the circled part C of Figure 13; Fig. 12 is included for illustration purposes only and is not considered an example or embodiment of the invention;
Figures 13a to 13c are perspective views which show sequential steps in joining tool components to each other to make a segmented larger flat tool component; Fig 13a to 13c are included for illustration purposes only and are not considered examples or embodiments of the invention;
Figure 14a is a sectional view through tool components joined to each other to make a variety of segmented nozzle tool components and is included for illustration purposes only and is not considered an example or embodiment of the invention;
Figure 14b is a sectional view through tool components joined to each other to make a variety of segmented nozzle tool components; Fig. 14b is included for illustration purposes only and is not considered an example or embodiment of the invention; and
Figure 15 is a perspective view showing means of attachment of a cutting drill tool prepared for fitment into a drill shank; Fig. 15 is included for illustration purposes only and is not considered an example or embodiment of the invention.

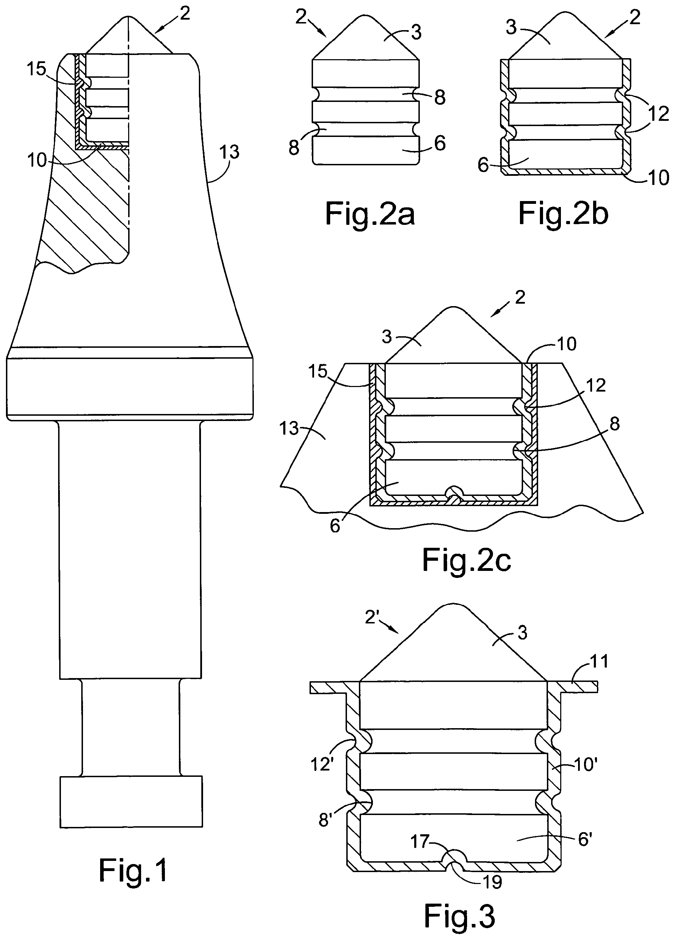

Figure 1 shows a tool component according to the invention comprising a wear part and a connection member. The wear part is a SCD pick 2 and the connection member is a steel cup 10. The pick 2 is held via connection member steel cup 10 within a metallic pick body 13. The steel cup 10 is secured to the metallic pick body 13 by a braze alloy 15. The SCD pick 2 is secured to the steel cup 10 by virtue of their co-operating shapes as described in more detail later.
Figures 2a and 2b show sequential stages in the manufacture of the tool component comprising pick 2 and steel cup 10, and Figure 2c shows the method of securement of the pick 2 within the pick body 13 via steel cup 10.

The pick 2 is generally cylindrical, with a substantially pointed tip 3. It has an anchor portion 6. The anchor portion 6 includes two annular grooves 8, longitudinally spaced from each other. The diameter of the substantially cylindrical pick 2 is approximately 15 mm. The pick 2 comprises SCD material that is a composite of diamond and silicon carbide. The SCD material may be formed in its green state into a generally cylindrical shape (with pointed tip 3) and then the annular grooves 8 may be machined into the green SCD body. The grooves may be up to 2 mm in depth. The grooved part may then sintered.

Figure 2b shows the SCD pick 2 of Figure 2a with a connection member 10 positioned around the pick 2. The connection member 10 is in the form of a cup of 0.2 mm thick mild steel 10 that has been drawn onto the SCD pick 2 so that the base of the cup is in contact with the base of the anchor portion 6 of the pick 2, and the sides of the cup extend over the sides of the pick 2 part way towards the tip 3 of the pick 2. The sides of the cup 10 have then been CIPed (cold isostatically pressed) into place around the anchor portion 6 of pick 2, so that the "base" of the cup 10 is in contact with the anchor portion 6 of pick 2, and the "sides" of the cup 10 extend up around the sides of anchor portion 6 of pick 2, and extend longitudinally beyond the annular grooves 8 in pick 2. The "sides" of the cup 10 follow the profile of the pick 2, forming co-operating grooves 12 adjacent to the grooves 8 in the pick 2. The thickness of the CIPed steel cup 10 is approximately 0.2 mm at all points. There is no specific chemical bond between the CIPed steel cup 10 and the SCD pick 2, but because of the co-operating profiles of the pick 2 and the CIPed steel cup 10, there is no relative movement between the pick 2 and the CIPed steel cup 10 in a direction longitudinally of the substantially cylindrical pick 2. Relative rotation between the pick 2 and the steel cup 10 could occur in this example, but alternative designs are envisaged that could prevent such rotation, if desired.

The CIPing process or any alternative possible isostatic pressing process advantageously applies a substantial uniform force in all inward directions onto the SCD pick 2. Since the cup 10 is made from mild steel a low force is required to CIP it into place to follow the profile of the SCD pick 2. Also since the cup 10 is made from mild steel it is ductile and hence there is no residual stress in the cup 10, and little to no residual stress on the pick 2.

Figure 2c shows the pick 2 and steel cup 10 of Figure 2b secured within the metallic pick body 13. The CIPed cup 10 surrounding the SCD pick 2 has been secured to the metal pick body 13 by brazing in a conventional manner. A braze alloy 15 is inserted between the pick body 13 and the steel cup 10 in a conventional way and is shown joining the steel cup 10 to the pick body 13. The braze insert 15 is typically about 0.1 mm in thickness The braze insert 15 advantageously absorbs energy, acting as a cushion, since the braze 15 is typically ductile. This advantageously improves the impact resistance of the secured SCD pick 2. Furthermore the braze layer 15 may be different thicknesses to allow for some variation in the dimensions of the pick 2. For example the pick may typically have a dimensional diameter tolerance of about 0.2 mm, and this can be accommodated by using different braze thicknesses. The braze dimensional tolerance also facilitates bonding to uneven surfaces. Furthermore the braze puts the SCD pick 2 into some compression (though not so great as would be the case with a shrink fitment). Some compression may be advantageous since SCD materials typically have better compressive strength than tensile strength, so the slight compression means the SCD component is less likely to be subjected to any, or significant, tensile stresses during operation.

Push off testing (shear stress assessment) was carried out to ascertain the strength of attachment achieved using the configuration illustrated in Figure 2c, and an average value of shear stress (averaged over 6 samples) of about 240 MPa was achieved. Actual shear stress values for each of the samples measured were 260, 172, 180, 252, 255 and 312 MPa. This value of 240 MPa is significantly higher (more than three times higher) than the shear stress expected by the person skilled in the art for simple adhesive attachment of an SCD pick into the tool body.

Figure 3 shows an alternative example of pick 2' according to the invention. The pick 2' comprises SCD material as before. A CIPed steel cup 10' surrounds pick 2', and the pick 2' and co-operating steel cup 10' each have co-operating annular grooves 8', 12' respectively. The connection member cup 10' has flanges 11 extending at its top radially outward. These are for connection within a pick body (not shown). The SCD pick 2' and the steel cup 10' also have a plurality of co-operating grooves 19 along their bases, extending radially. These grooves substantially prevent relative rotation between the pick 2' and the connection member steel cup 10'.

Other variations of co-operating formations in the surfaces of the SCD pick 2 and the connection member 10 other than the annular grooves shown are also envisaged, including but not limited to longitudinal grooves part way or the whole way along the length of the SCD pick 2, angled grooves, ridges, dimples, depressions, screw thread orientations and the like.

The arrangement shown in Figures 1-3 allows an SCD pick, or a carbide pick, which are known to be difficult to bond to other materials (for example to metals) by conventional methods (for example brazing, soldering, welding, friction welding, ultrasonic bonding, or shrink fitting) to be securely fastened within a metal or carbide pick body 13, via the connection member steel cup 10, the connection member steel cup 10 being: (a) mechanically secured, but not surface-bonded to the SCD pick 2 by the co-operating grooves 8 and 12, and (b) surface-bonded to the pick body 13 by means of braze 15.

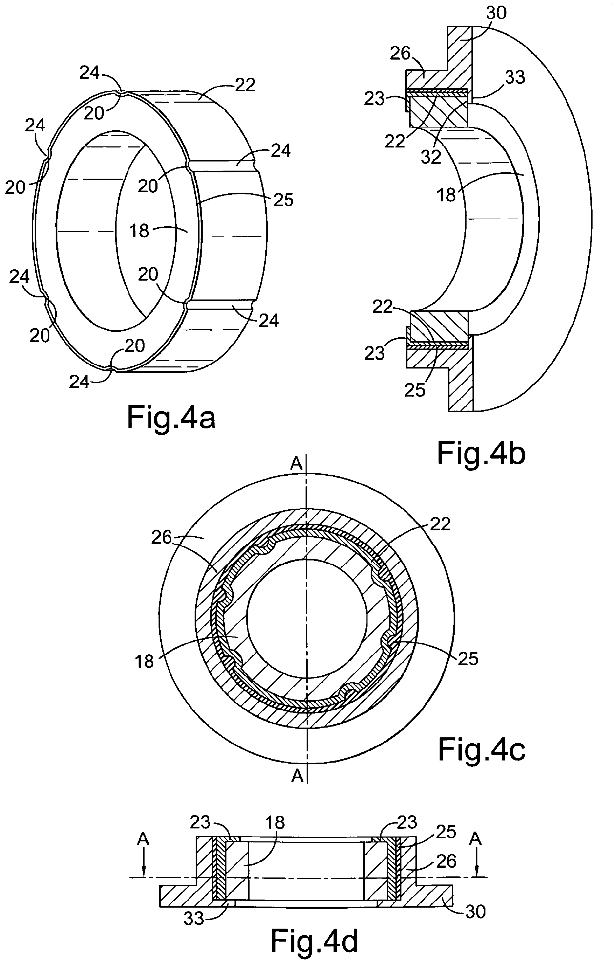

Figure 4a shows an annular bearing 18 which contains six longitudinally extending grooves 20 on its curved outer surface. The diameter of the annular ring 18 is approximately 60 mm. The grooves 20 are approximately 0.5 mm in depth. The annular bearing 18 comprises SCD material. Surrounding the SCD bearing 18 is an annular CIPed ring of steel 22, containing six grooves 24 corresponding to the grooves 20 in the SCD part 18. The CIPed steel ring 22 is approximately 0.2 mm in thickness. The CIPed steel ring 22 covers the entire outer surface (as defined) of the annular SCD bearing 18. A flange extends from the curved annular surface of CIPed steel ring, part way over the hidden end face of the SCD ring 18. The flange is not visible in Figure 4a, but is visible and referenced 23 in Figures 4b and 4d which are described later. The said flange extends from the entire circumferential boundary between the curved surface of ring 18 and the said hidden end face of the ring 18 about half way towards the inner circumferential boundary defining the inner surface of the annular ring 18.

The steel ring 22 with flange 23 may conveniently be fashioned by drawing a mild steel cup over the SCD ring, so that the base of the cup is adjacent the flat end face of the SCD ring 18 that is hidden in Fig 4a, and the sides of the cup overlap the entire curved outer surface of annular ring 18, punching a circular opening in the drawn cup, and then CIPing the cup into close contact with the ring 18 so that it follows the profile thereof.

Other variations of co-operating formations out of the surfaces of the SCD ring 18 and the steel covering 22 other than the longitudinal grooves shown are also envisaged as described hereinbefore, including but not limited to longitudinal grooves extending only part way along the length (between the flat end faces) of the SCD ring 18, angled grooves, ridges, dimples depressions, screw thread orientations and the like.

There is no specific bond between the CIPed connection member steel ring 22 and the SCD bearing ring 18, but because of the co-operating profiles of the grooved bearing ring 18 and the CIPed connection member steel ring 22, there is no relative movement between the bearing 18 and the ring 22 in a radial direction. Longitudinal movement of the bearing 18 relative to the ring 22 in the direction of the flange 23 is substantially prevented by the flange 23.

Figure 4b is a perspective sectioned view showing half of the SCD bearing ring 18 and CIPed connection member steel ring 22 and also a second annular steel member 26 surrounding the first CIPed steel ring 22. The steel member 26 provides a mounting member, for example for mounting within a tool body. The mounting member 26 can be brazed to the CIPed ring 22 using a braze, for example a 1100°C braze, in a conventional manner. The braze layer is indicated by reference numeral 25. The second steel member 26 surrounds the entire curved outer surface of the CIPed steel ring 22, and also has an flange 30 with one section extending away from the annular rings for further attachment within a tool body, e.g by bolting, riveting or the like, and another section 33 extending part way along the end face 32 of SCD bearing 18. The section 33 of flange 30 substantially prevents longitudinal movement of the bearing ring 18 relative to the steel coverings 22 and 26 in the direction to the right as shown in Figure 4b. Therefore in combination the respective flanges 23 and 33 on steel covering 22 and 26 substantially prevent any relative longitudinal movement between the bearing 18 and the steel coverings. Relative rotational movement is substantially prevented by the co-operating grooves 20 and 24 in the ScD wear bearing 18 and the CIPed steel covering 22, so there is substantially no relative movement occurring between the SCD wear bearing 18 and the steel covering connection members 22 and 26.

Figure 4c is a front sectional view through the SCD bearing 18, CIPed metal cup 22, braze layer 25, and second annular steel member 26 that are shown in perspective in Figure 4b. Figure 4d is a cross-sectional view through the line A-A of the Figure 4c view. Figure 4d shows the flange 23 on metal cup 22 and the flange section 33 of flange 33 extending from mounting member 26.

The mounting member 26 may have any suitable profile depending on its application. The example shown in Figures 4a to 4d therefore allows a SCD bearing to be attached to any shaped metal part by means of the interlocked profiled SCD bearing shape, and co-operatingly shaped steel layer. The bearing 18 and steel layer 22 of these figures may be used in a wide variety of applications where it is desirable to combine the properties of wear resistance, as provided by the SCD material, with ease and functionality of attachment, as provided by metal parts, such as steel covering layer 22 and steel mounting member 26. For example, the bearing may be used in downhole tools. It may be used for example in roller cone drill bits. In such applications the steel member 26 may be secured into metal, alloy, carbide or cemented carbide tool bodies in a variety of ways, for example, bolted, welded, or brazed, e.g. with a braze typically in the range 600°C to 1100°C, although higher temperature brazes could also be used.

Where there is a mounting member of the type described above, connection of the tool component to a tool body may be via the connection member and the mounting member, the connection member being secured to the tool component and bonded in some way to the mounting member, and the mounting member in turn being secured to the tool body.

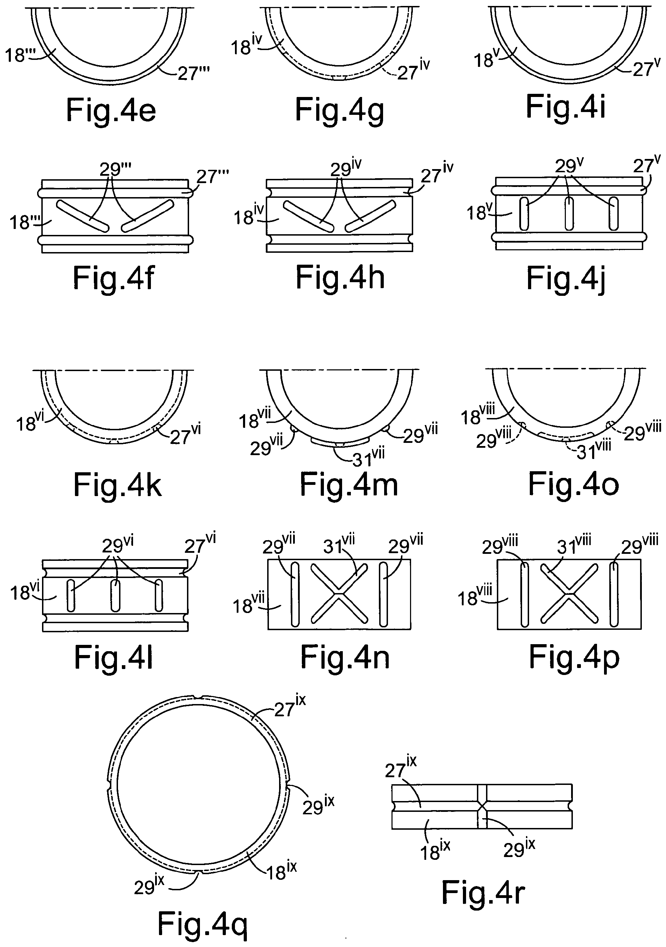

Figures 4e and 4f show an alternative example of SCD bearing 18‴ which can replace the bearing 18 illustrated in Figures 4a to 4d. In this case SCD bearing 18‴ is provided with upstanding projections in the form of circumferentially extending projecting sections 27‴ and angled projections 29"'. Adjacent angled projections extend at an angle to each other. The circumferentially extending projecting sections 27‴ may extend continuously or in isolated sections around the whole circumference of the SCD bearing 18'".

Figures 4g and 4h show an alternative example of SCD bearing 18^{iv} which can replace the bearing 18 illustrated in Figures 4a to 4d. In this case SCD bearing 18^{iv} is provided with depressions in the form of circumferentially extending grooves 27^{iv} and angled projections 29 ^{iv}. The circumferentially extending grooves 27 ^{iv} may extend continuously or in isolated sections around the whole circumference of the SCD bearing 18 ^{iv}. The Figure 4g and 4h example is therefore the same as the Figure 4e and 4f example except that, in the Figure 4g and 4h example, depressions in the form of grooves replace the circumferentially extending projecting sections 27‴ of the Figure 4 e and 4f example.

Figures 4i and 4j show an alternative example of SCD bearing 18^{v} which can replace the bearing 18 illustrated in Figures 4a to 4d. It is similar to that illustrated in Figures 4e and 4f except that angled protrusions 29‴ are replaced by a plurality of longitudinal protrusions 29^{v} each extending part way between the circumferential protrusions 27'".

Figures 4k and 4l show an alternative example of SCD bearing 18^{vi} which can replace the bearing 18 illustrated in Figures 4a to 4d. It is similar to that of Figures 4i and 4j except that circumferential protrusions 27‴ and longitudinal protrusions 29^{v} are replaced by circumferential grooves 27^{vi} and longitudinal grooves 29^{vi}.

Figures 4m and 4n show an alternative example of SCD bearing 18^{vii} which can replace the bearing 18 illustrated in Figures 4a to 4d. In this case SCD bearing 18 ^{vii} is provided with upstanding projections in the form of longitudinally extending projecting sections 29 ^{vii} and cross shaped projections 31^{vii}. These raised projections may be arranged around the entire circumference or part only of the circumference of the SCD bearing 18^{vii}.

Figures 4o and 4p show an alternative example of SCD bearing 18^{viii} which can replace the bearing 18 illustrated in Figures 4a to 4d. It is similar to the example of Figures 4m and 4n except that grooved depressions 29^{viii} and 31^{viii} replace the raised projecting sections 29^{vii} and 31^{vii}.

Figures 4q and 4r are plan and side views respectively showing an alternative example of SCD bearing 18^{ix}, which can replace the bearing 18 illustrated in Figures 4a to 4d. It includes one circumferential groove 27^{ix}, and axially extending grooves 29^{ix}.

The alternative example illustrated in Figures 4e to 4r have two or more formations extending in different directions, and advantageously can substantially prevent relative movement between the SCD part 18 and the connection member 22 without the need for any additional flange(s).

The example shown in Figures 4a to 4d or any of its variants as described with reference to Figures 4e to 4p may be used for example as a rotating bearing or a mechanical seal.

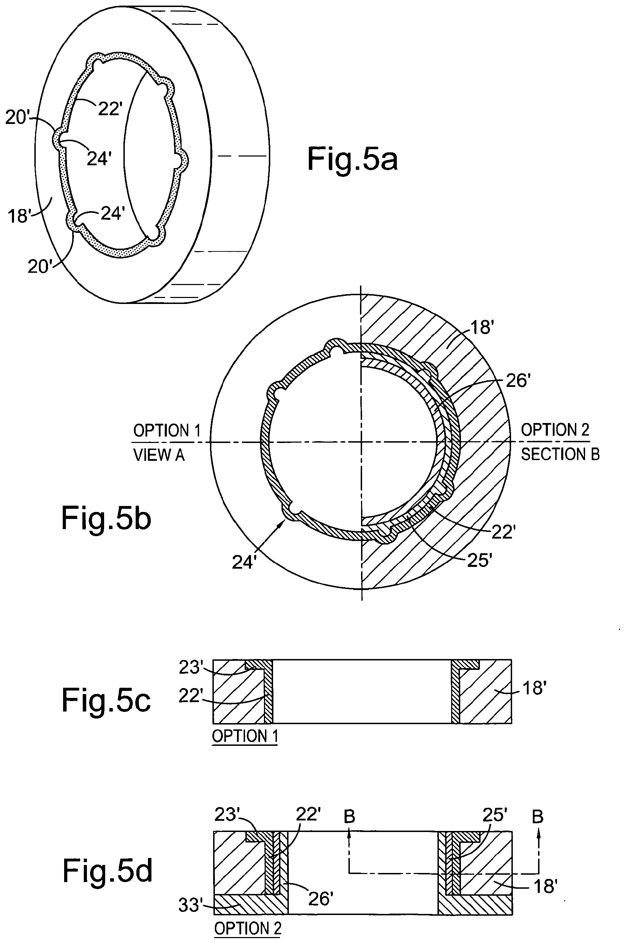

Figure 5a shows an inside-out version of the example of figures 4a to 4d. Figure 5b shows the bearing of Figure 5a in front sectional view, with an optional inner second annular steel member 26' shown for the right-side option of the Figure. Figure 5c is a cross sectional view through the left-side option of Figure 5b, without the additional second annular steel member 26', and Figure 5d is a cross sectional view through the right-side option of Figure 5b, with the second annular steel member 26' in place. In the Figure 5 example, an annular steel ring 22' lies within the SCD ring 18', with co-operating grooves 20' in the SCD ring 18' and 24' in the steel ring 22' as before. As before a flange extends from the covering steel ring 22' across part of the end face of the SCD ring 18' (not visible in figure 5a but referenced as 23' in Figures 5c and 5d) substantially to prevent longitudinal movement of the SCD ring 18' relative to the steel ring 22' into the plane of the paper (in the orientation illustrated in Figure 5a). Also, as before, a second steel member 26' with flange 33' across the opposed end face of ring 18' can be brazed around ring 22'. This is illustrated as the right hand option in Figure 5b. The bearing of Figure 5b could be suitable for example as a stationary bearing.

Any of the variations illustrated in Figures 4e to 4p would also be suitable for use in the inside out bearing variant of Figure 5.

Similarly any of the variations of formations of projections or depressions illustrated in Figures 4e to 4o for the SCD bearing would also be suitable for use in the SCD pick of Figures 1 to 3.

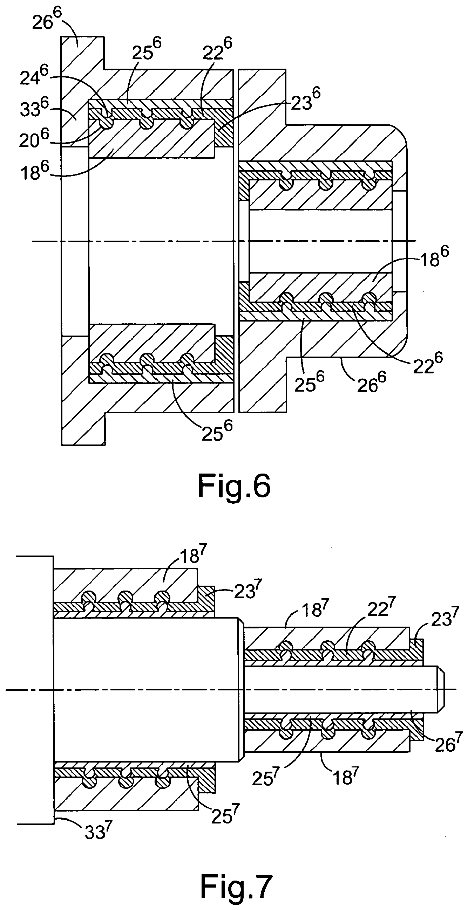

Figure 6 is a side sectional view of two bearings similar to that illustrated in Figure 4, but with grooves 20⁶ and 24⁶ extending circumferentially rather than longitudinally of the SCD bearing 18⁶ and steel cup 22⁶ respectively. One of the bearings is of relatively large diameter, and the other is of a relatively smaller diameter. These might be used for example as rotating bearings in a roller cone drill bit, the larger bearing operating against the main journal surface of the metal bearing pin of the drill bit, and the smaller bearing operating against the substantially parallel nose surface of the metal bearing pin of the drill bit. For each bearing the steel layer 22⁶ acts as a connection member, being mechanically secured to the SCD wear part 18⁶ by its co-operatingly shaped grooves, and bonded to mounting member 26⁶ by braze layer 25⁶. Longitudinal movement of the SCD bearing ring 18⁶ relative to the steel cup 22⁶ is substantially prevented in each case not only by the flange 23⁶ on the steel cups 22⁶ and by flanges 33⁶ on opposite ends of the second annular steel members 26⁶, but also by the mating circumferential grooves 20⁶ and 24⁶ in the SCD bearing 18⁶ and steel cup 22⁶ respectively. The flanges 23⁶ and 33⁶ are in this case optional.

Figure 7 is a side sectional view through two bearings similar to that illustrated in Figure 5a to 5d, but with grooves 20⁷ and 24⁷ extending circumferentially rather than longitudinally of the SCD bearing 18⁷ and steel cup 22⁷ respectively. One is of relatively large diameter and the other of relatively small diameter. These might be used as stationary bearings, for example in a roller cone drill bit. For each bearing the steel layer 22' acts as a connection member, being mechanically secured to the wear SCD layer 18' by co-operatingly shaped grooves in the two layers, and bonded to metal shafts 26' by braze layer 25'. Longitudinal movement of the SCD bearing ring 18' relative to the steel cup 22' is substantially prevented in each case in one direction by the flanges 23' on the steel cups 22'. Movement in the other longitudinal direction is substantially prevented in the case of the smaller bearing by the abutting end face of the metal shaft 26' within the larger bearing, and in the case of the larger bearing by a flange 33'.

The examples of Figures 6 and 7 may be used in conjunction with each other. For example the figure 7 example may form a stationary inner bearing pair within the Figure 6 outer rotating bearing pair.

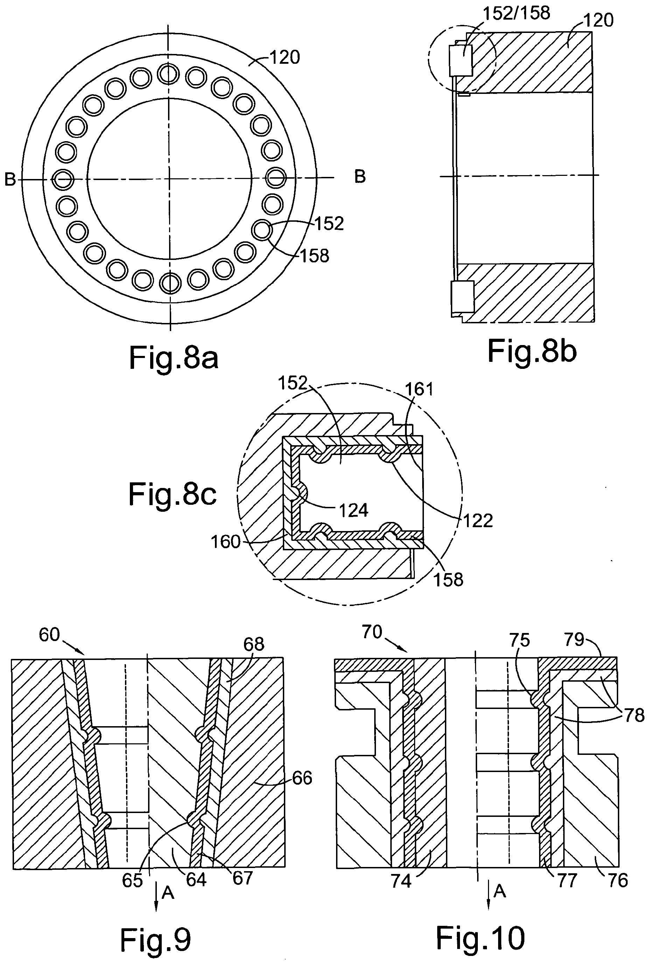

Figure 8a is an end view of a plurality of SCD wear parts in a thrust bearing, the wear parts being mounted in a ring around a metal housing part. Figure 8b is a sectional view taken along line B-B of Figure 8a and Figure 8c is an enlarged sectional view of the circled portion of Figure 8b. Each SCD wear part 152 is surrounded by a metal cup 158 which is brazed in turn by braze layer 160 to metal housing 120. The SCD cylinder 152 and the surrounding metal cup 158 are secured relative to each other by means of co-operating annular grooves 122 around the curved sides and by co-operating radial grooves 124 on the end face of the cylinder 152 and the "base" of the cup 158 (see figure 8c). Exposed end face 161 of the SCD solid cylindrical bearing 152 provides a thrust bearing surface. Such a thrust bearing might be suitable for example as a thrust bearing for down-the-hole drives, hydraulic motors and/or turbines.

Figure 9 is included for illustration purposes only and is not considered an example of the invention and is a cross-sectional view through a nozzle 60 for passage of fluid, for example for oil/sand separation. The direction of fluid flow in use is indicated by arrow A. The nozzle contains a central bore, and is a two-part piece which comprises an inner SCD wear core part 64 and an adjacent housing part 66. The outer surface of SCD wear core part 64 is frustoconical in shape, and the part 67 may be considered to be a solid frustocone with a cylindrical bore extending through it for fluid passage. The inner surface of the surrounding adjacent housing part 66 is shaped to correspond to the SCD wear core 64. The housing part 66 is made from a readily machinable material such as a metal or alloy such as steel or from tungsten carbide. The SCD core part 64 is not only formed to be substantially frustoconical in shape but also has annular grooves 65 formed around the frustoconical part. A steel cup 67 is drawn over the frustoconical SCD part 64 and then CIPed so that it follows the profile of the core 64 into the grooves 65 of the SCD core 64. Both inner and outer surfaces of the CIPed part 67 follow the underlying profile of the SCD part 64. The CIPed steel layer 67 can then be brazed by layer 68 to the metallic housing 66. The co-operating grooves of the SCD core 64 and the steel cup 67 act in combination with the frusto-conical shape of the nozzle substantially to prevent relative movement between the SCD core 64 and the steel layer 67..

Figure 10 is a cross-sectional view through a nozzle 70 for passage of fluid, for example for oil/sand separation. As in Figure 9 the direction of fluid flow in use is indicated by arrow A. The nozzle contains a central bore, and is a two-part piece which comprises an inner SCD wear core part 74 and an adjacent housing part 76. The SCD wear core part 74 is substantially cylindrical in shape, with an annular flange 79 at the fluid inlet end. The inner surface of the surrounding adjacent housing part 76 is shaped to correspond to the SCD wear core 74. The housing part 76 is made from a readily machinable material such as a metal or alloy such as steel or from tungsten carbide. In this example the SCD core part 74 is formed to be substantially cylindrical in shape with an outwardly extending annular flange 79, and has annular grooves 75 formed around the cylindrical part. A steel cup 77 is drawn over the SCD part 74 and then CIPed so that it follows the profile of the core 74 into the groove 75 of the SCD core part 74. The CIPed steel layer 77 together with its flange 79 can then be brazed by braze layer 78 to the alloy housing 76. In this case the co-operating grooves of the SCD core 74 and the steel cup 77 act in combination with the flange on the SCD core 74 substantially to prevent relative movement between the SCD core 74 and the steel layer 77.

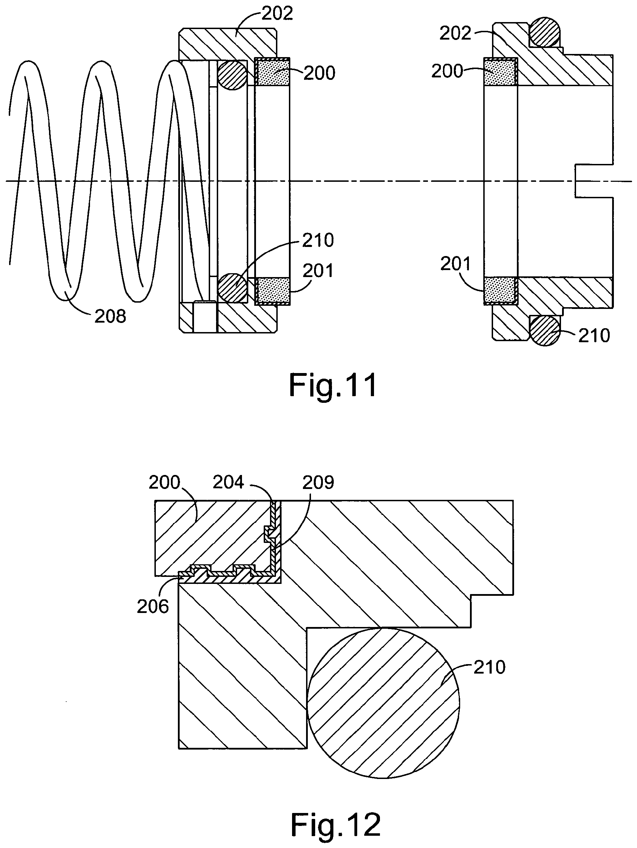

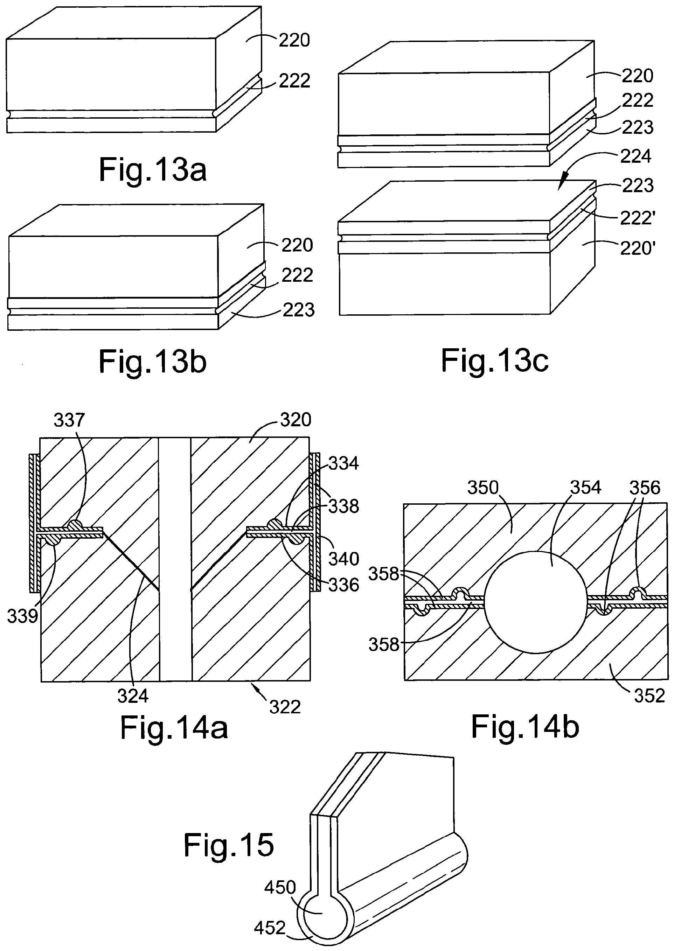

Figures 11 and 12 show a mechanical seal arrangement in which two annular mating SCD rings 200 with mating wear or seal faces 201 are each held in respective annular metal tool holders 202, the two SCD ring seal surfaces 201 being urged towards each other via spring 208, or the like. The manner in which the SCD rings 200 are held in the tool holder 202 is illustrated in the enlarged view of Figure 12. Figure 12 shows that each SCD ring 200 contains grooves on its circumferential surface and also on its mounting face which faces the tool holder 202 onto which a steel cup layer 204 has been isostatically pressed so as to follow the profile of the SCD ring. The steel cup layer 204 is brazed to the metal, alloy or carbide tool holder 202 by a braze layer 206. O ring seals are illustrated in these figures by reference 210. the tool component of this Figure 13/14 example is similar to the bearing of earlier Figures, especially earlier Figure 4. The wear/seal part is an annular ring and the steel cup 204 covers part of the circumferential surface of the ring 200 (in contrast it covers the entire circumferential surface of the ring in the bearing example illustrated in Figure 4). The steel cup 204 in the Figure 11/12 example also covers the entire mounting face of the SCD ring 200 (the end face 209 facing the tool holder). Where we say in this specification that one layer covers another surface we mean it covers that layer at least in part, e.g. up to 10%, up to 20%, up to 50%, up to 70% or the whole of that layer.

Figures 13a to 13c show sequential steps in making a tool component in segmented parts. Figure 13a shows a tool component comprising a SCD segment 220 in the form of a rectangular block. Towards the base of the block and parallel to the horizontal edges of the block, as illustrated a longitudinal groove 222 has been green machined (i.e. machined into the block when in its green state) into the block around the entire periphery of the block 220. In Figure 13b a copper cup shaped part 224 has been CIPed into place around the block 220. The same process is then applied to a separate SCD block 220' with a separate copper cup 222', and then the two parts can be positioned adjacent each other with the cup bases facing each other and brazed together via a braze layer positioned as indicated by arrow 224 in Figure 13c between the two facing cup faces of cups 222 and 222'. Thus a larger segmented tool component is made from two smaller segments. This process can be repeated to make tool components with three or more, even a plurality of parts. Although exemplified by a rectangular block the person skilled in the art would appreciate that this technique to make segmented tool components can be applied to a wide variety of shaped tool components, and the simple block configuration is illustrated merely by way of explanation.

Figures 14a is included for illustration purposes only and is not considered an example of the invention.

Figure 14b shows an example of segmented parts, namely a segmented nozzle.

Figure 14a shows a nozzle made up of two longitudinal SCD segments 320 and 322 positioned end to end so they about at join surface 324. In this one segment 320 has an end region of one diameter, this end region then tapering in a frusto conical shape from that first end region towards the other segment 322. The other segment 322 has a shape that co-operates and fits with the upper segment 320. Thus in the orientation shown there is a part horizontal and part tapered join surface between the two segments 320 and 322. Two cup shaped steel or iron connection member 334 and 336 with an aperture through the base of the cup to receive part of the nozzle walls and to surround the respective nozzle segments 320' and 322' and is CIPed in place around the nozzle part. Part of the cup base of the connection member 334' and 336' extends along the horizontal part of the join surface of the segment parts. Additionally grooves 337 and 339 are machined into end faces of nozzle segments 320 and 322 respectively, into which grooves the connection members 334 and 336 are pressed. These grooves enhance the mechanical connection. The segments 320 and 322 are brazed via their connection members by braze layer 33'. An additional strip 340 may be positioned around the join area.

Figure 14c shows another example of segmented nozzle made up of two longitudinally arranged SCD nozzle segments 320" and 322". In this case the upper segment 320" in the orientation shown has a neck portion 342 extending at its lower end into a mating opening on the upper face of the lower segment 322". In this case the connection member 334" on the upper segment 320" comprises a cylindrical steel or iron part with an outwardly extending flange from one end, and the connection member 336" on the other lower segment 322" is similarly shaped part but of larger internal diameter, each connection member being CIPed onto its respective SCD nozzle part 330 and 332. A braze layer 338" joins the SCD nozzle segments via the connection members.

Figure 14b is another segmented nozzle, but differs from Figure 14c since in this case the segments are split along the length of the nozzle and are arranged side by side. In the orientation shown upper segment 350 and lower segment 352 of SCD provide nozzle segments that extend along the length of the nozzle and are side by side around the nozzle opening. The nozzle parts 350 and 352 thus provide a flat join surface with a cylindrical nozzle opening through and parallel to that flat surface. Grooves 356 are machined into each of the flat surfaces of nozzle parts 350 and 352 and a connection member layer 358 is pressed (CIPed) against each flat surface and into the grooves 356. A braze layer then joins the connection members to each other. An outer ring or sheet holding the nozzle parts together around the outside periphery of parts 350 and 352 (not illustrated) may also be included for further securement.

Figure 15 shows a SCD cutting tool 450 in the form of a cutting drill bit around the flat faces of which a mild steel connection member 452 has been CIPed into place. This mild steel part can then be readily attached, for example keyed into a drill shank.

## Claims

1. A tool component comprising a wear part (2;2';18;8';18‴;18^{iv};18^{v};18^{vi};18^{vii};18^{viii};18^{ix};18⁶;18⁷;152;74;
320",322";350,352) that is covered at least in part by a connection member (10;10';22;334",336";358), the wear part (2;2';18;18';18‴;18^{iv};18^{v};18^{vi};18^{vii};18^{viii};18^{ix};18⁶;18⁷;152;74;
320",322";350,352) having a hardness of at least 15 GPa, and the connection member (10;10';22;334",336";358) comprises a metal or alloy, the connection member having a hardness less than 15 GPa, the connection member (10;10';22;334",336";358) being in the form of a sheet or being a cylindrical part, and the connection member (10;10';22;334",336";358) providing a layer over at least part of the wear part; at least part of the connection member (10;10';22;334",336";358) having been pressed against at least part of the surface of the wear part such that a surface (12;12') of the connection member (10;10';22;334",336";358) that faces a surface of the wear part (2;2';18;18';18‴;18^{iv};18^{v};18^{vi};18^{vii};18^{viii};18^{ix};18⁶;18⁷;152;74;
320",322";350,352) follows the profile of the said part of the surface of the wear part (2;2';18;18';18‴;18^{iv};18^{v};18^{vi};18^{vii};18^{viii};18^{ix};18⁶;18⁷;152;74;320",322";350,3 52) against which it has been pressed, whereby the surfaces of the wear part (2;2';18;18';18‴;18^{iv};18^{v};18^{vi};18^{vii};18^{viii};18^{ix};18⁶;18⁷;152;74; 320",322";350,352) and the connection member (10;10';22;334",336";358) are co-operatively shaped such that relative movement between the two parts is substantially prevented at least during operation of the tool component; and wherein not only the surface of the connection member (10;10';22;334",336";358) that faces the wear part (2;2';18;18';18‴;18^{iv};18^{v};18^{vi};18^{vii};18^{viii};18^{ix};18⁶;18⁷;152;74;
320",322";350,352) follows the profile of the wear part (2;2';18;18';18‴;18^{iv};18^{v};18^{vi};18^{vii};18^{viii};18^{ix};18⁶;18⁷;152;74;
320",322";350,352) but also the opposed surface of the connection member (10;10';22;334",336";358);
**characterized in that** the ratio of the thickness of the connection member (10;10';22;334",336";358) to the thickness of the wear part (2;2';18;18';18‴;18^{iv};18^{v};18^{vi};18^{vii};18^{viii};18^{ix};18⁶;18⁷;152;74;320",322";350, 352) underlying it measured at any point being at most 1:10; wherein the wear part (2;2';18;18';18‴;18^{iv};18^{v};18^{vi};18^{vii};18^{viii};18^{ix};18⁶;18⁷;152;74; 320",322";350,352) is substantially cylindrical, the wear part comprising a surface that includes one or more depressions (8;8';20;27^{iv};27^{vi},29^{vi};29^{viii},31^{viii};27^{ix},29^{ix};20⁶,24⁶;20⁷,24⁷;122;75;356) therein, the one or more depressions comprising one or more annular grooves (8;8';20;27^{iv};27^{vi},29^{vi};29^{viii},31^{viii};27^{ix},29^{ix};20⁶,24⁶;20⁷,24⁷;122;75;356) extending around the substantially cylindrical wear part; wherein at least part of the connection member (10;10';22;334",336";358) having been pressed against at least part of the surface of the wear part (2;2';18;18';18‴;18^{iv};18^{v};18^{vi};18^{vii};18^{viii};18^{ix};18⁶;18⁷;152;74;320",322";350, 352) that includes the one or more depressions (8;8';20;27^{iv};27^{vi},29^{vi};29^{viii},31^{viii};27^{ix},29^{ix};20⁶,24⁶;20⁷,24⁷;122;75;356) therein; and wherein the wear part (2;2';18;18';18‴;18^{iv};18^{v};18^{vi};18^{vii};18^{viii};18^{ix};18⁶;18⁷;152;74;320",322";350, 352) comprises a ceramic material, a cermet material, or a superhard material or a composite of a ceramic and a superhard material, or a cermet and a superhard material.

2. A tool component according to claim 1, wherein the connection member (10;10';22;334",336";358) has been isostatically pressed against at least part of the surface of the wear part (2;2';18;18';18‴;18^{iv};18^{v}; 18^{vi};18^{vii};18^{viii};18^{ix};18⁶;18⁷;152;74; 320",322";350,352) that includes the one or more depressions (8;8';20;27^{iv};27^{vi},29^{vi};29^{viii},31^{viii};27^{ix},29^{ix};20⁶,24⁶;20⁷,24⁷;122;75;356).

3. A tool component according to claim any one of claims 1 or 2, wherein the connection member (10;10';22;334",336";358) is substantially cup shaped, the base of the cup seating against the base of the cylindrical wear part (2;2';18;18';18‴;18^{iv};18^{v};18^{vi};18^{vii};18^{viii};18^{ix};18⁶;18⁷;152;74;320",322";350,352), and the sides of the cup extending at least part way up the cylindrical wear part, the sides of the cup covering and following the profile of the said grooves (8;8';20;27^{iv};27^{vi},29^{vi};29^{viii},31^{viii};27^{ix},29^{ix};20⁶,24⁶;20⁷,24⁷;122;75;356) therein.

4. A tool component according to claim 3, wherein cup shaped connection member (10;10';22;334",336";358) comprises a metal or alloy that has been drawn around the wear part (2;2';18;18';18‴;18^{iv};18^{v};18^{vi};18^{vii};18^{viii};18^{ix};18⁶;18⁷;152;74;320",322";350,352), and the sides of the cup have been isostatically pressed into contact with the curved sides of the wear part (2;2';18;18';18‴;18^{iv};18^{v};18^{vi};18^{vii};18^{viii};18^{ix};18⁶;18⁷;152;74;320",322";350,352) to follow the profile of the grooves (8;8';20;27^{iv};27^{vi},29^{vi};29^{viii},31^{viii};27^{ix},29^{ix};20⁶,24⁶;20⁷,24⁷;122;75;356) therein.

5. A tool component according to any preceding claim, wherein the wear part (2;2';18;18';18‴;18^{iv};18^{v};18^{vi};18^{vii};18^{viii};18^{ix};18⁶;18⁷;152;74; 320",322";350,352) is the form of an annular ring (18;18';18‴;18^{iv};18^{v};18^{vi};18^{vii};18^{viii};18^{ix};18⁶;18⁷;152), the annular ring (18;18';18‴;18^{iv};18^{v};18^{vi};18^{vii};18^{viii};18^{ix};18⁶;18⁷;152) having curved outer and inner surfaces and two substantially flat end faces, and the connection member (22) is also in the form of an annular ring, the annular connection member (22) surrounding the annular wear part (18;18';18‴;18^{iv};18^{v};18^{vi};18^{vii};18^{viii};18^{ix};18⁶;18⁷;152), or vice versa.

6. A tool component according to any preceding claim, wherein the wear part (2;2';18;18';18‴; 18^{iv};18^{v};18^{vi};18^{vii};18^{viii};18^{ix};18⁶;18⁷;152;74; 320",322";350,352) comprises a superhard/ceramic composite material, and the superhard component is diamond material, and the ceramic component is silicon carbide.

7. A tool component according to any preceding claim, which is nozzle insert (70) containing a bore for fluid, or wherein said wear part of the tool component is a wear resistant pick, or wherein said wear part provides a bearing within a drilling or cutting equipment.

8. A tool comprising a tool component according to any preceding claim secured within a tool body via the connection member (10;10';22;334",336";358).

9. A method of making a tool component by joining (i) a wear part (2;2';18;18';18‴;18^{iv};18^{v};18^{vi};18^{vii};18^{viii};18^{ix};18⁶;18⁷;152;74; 320",322";350,352) having a hardness of at least 15 GPa to (ii) a connection member (10;10';22;334",336";358) comprising a metal or alloy having a hardness less than 15 GPa and being in the form of a sheet or being a cylindrical part; the joining being carried out by pressing the metal connection member (10;10';22;334",336";358) against the wear part (2;2';18;18';18‴;18^{iv};18^{v};18^{vi};18^{vii};18^{viii};18^{ix};18⁶;18⁷;152;74;,322";350,352) so that the connection member (10;10';22;334",336";358) provides a layer over at least part of the wear part (2;2';18;18';18‴;18^{iv};18^{v};18^{vi};18^{vii};18^{viii};18^{ix};18⁶;18⁷;152;74;320",322";350,352) such that a surface (12;12') of the connection member (10;10';22;334",336";358) that faces a surface of the wear part (2;2';18;18';18‴;18^{iv};18^{v};18^{vi};18^{vii};18^{viii};18^{ix};18⁶;18⁷;152;74; 320",322";350,352) follows the profile of the said part of the surface of the wear part (2;2';18;18';18‴;18^{iv};18^{v};18^{vi};18^{vii};18^{viii};18^{ix};18⁶;18⁷;152;74; 320",322";350,352) against which it has been pressed, whereby the surfaces of the wear part (2;2';18;18';18‴;18^{iv};18^{v};18^{vi};18^{vii};18^{viii};18^{ix};18⁶;18⁷;152;74; 320",322";350,352) and the connection member (10;10';22;334",336";358) are co-operatively shaped such that relative movement between the two parts is substantially prevented at least during operation of the tool component; and wherein not only the surface (12;12') of the connection member (10;10';22;334",336";358) that faces the wear part (2;2';18;18';18‴;18^{iv};18^{v};18^{vi};18^{vii};18^{viii};18^{ix};18⁶;18⁷;152;74; 320",322";350,352) follows the profile of the wear part (2;2';18;18';18‴;18^{iv};18^{v};18^{vi};18^{vii};18^{viii};18^{ix};18⁶;18⁷;152;74; 320",322";350,352) but also the opposed surface of the connection member (10;10';22;334",336";358); **characterized in that** the ratio of the thickness of the connection member (10;10';22;334",336";358) to the thickness of the wear part (2;2';18;18';18‴;18^{iv};18^{v};18^{vi};18^{vii};18^{viii};18^{ix};18⁶;18⁷;152;74; 320",322";350,352) underlying it measured at any point being at most 1:10;
wherein the wear part (2;2';18;18';18‴;18^{iv};18^{v};18^{vi};18^{vii};18^{viii};18^{ix};18⁶;18⁷;152;74; 320",322";350,352) is substantially cylindrical, the wear part comprising a surface that includes one or more depressions (8;8';20;27^{iv};27^{vi},29^{vi};29^{viii},31^{viii};27^{ix},29^{ix};20⁶24⁶;20⁷24⁷;122;75;356) therein, the one or more depressions comprising one or more annular grooves (8;8';20;27^{iv};27^{vi},29^{vi};29^{viii},31^{viii};27^{ix},29^{ix};20⁶24⁶;20⁷24⁷;122;75;356) extending around the substantially cylindrical wear part; and wherein at least part of the connection member (10;10';22;334",336";358) having been pressed against at least part of the surface of the wear part (2;2';18;18';18‴;18^{iv};18^{v};18^{vi};18^{vii};18^{viii};18^{ix};18⁶;18⁷;152;74;320",322";350, 352) that includes the one or more depressions (8;8';20;27^{iv};27^{vi},29^{vi};29^{viii},31^{viii};27^{ix},29^{ix};20⁶,24⁶;20⁷,24⁷;122;75;356) therein; and wherein the wear part (2;2';18;18';18‴;18^{iv};18^{v};18^{vi};18^{vii};18^{viii};18^{ix};18⁶;18⁷;152;74;320",322";350, 352) comprises a ceramic material, a cermet material, or a superhard material or a composite of a ceramic and a superhard material, or a cermet and a superhard material.

10. A segmented tool component each segment of which comprises a tool component according to any of claims 1 to 6, each segment comprising a wear part (320",322";350,352) and a connection member (334",336";358) arranged relative to each other in the manner defined in any of claims 1 to 7, and the connection members (334",336";358) of adjacent segments being secured to each other, thereby securing said wear parts (320",322";350,352) of adjacent segments to each other.

11. A method according to claim 9 of making a tool component, said tool component being segmented, each segment (320",322";350,352) comprising a wear part and a connection member (334",336";358) arranged relative to each other in the manner defined in any of claims 1 to 6 or any of claims 9 to the method additionally comprising securing connection members (334",336";358) of adjacent segments to each other, thereby securing said wear parts (320",322";350,352) of adjacent segments to each other.

## Patentansprüche

1. Werkzeugkomponente, die ein Verschleißteil (2; 2'; 18; 18'; 18‴; 18^{iv}; 18^{v}; 18^{vi}; 18^{vii}; 18^{viii}; 18^{ix}; 18⁶; 18⁷; 152; 74; 320", 322"; 350, 352) aufweist, das mindestens teilweise durch ein Verbindungselement (10; 10'; 22; 334", 336"; 358) abgedeckt ist, wobei das Verschleißteil (2; 2'; 18; 18'; 18‴; 18^{iv}; 18^{v}; 18^{vi}; 18^{vii}; 18^{viii}; 18^{ix}; 18⁶; 18⁷; 152; 74; 320", 322"; 350, 352) eine Härte von mindestens 15 GPa hat und das Verbindungselement (10; 10'; 22; 334", 336"; 358) ein Metall oder eine Legierung aufweist, wobei das Verbindungselement eine Härte von weniger als 15 GPa hat, das Verbindungselement (10; 10'; 22; 334", 336"; 358) die Form eines Bahnenmaterials hat oder ein zylindrisches Teil ist und das Verbindungselement (10; 10'; 22; 334", 336"; 358) eine Schicht über mindestens einem Teil des Verschleißteils bildet; wobei mindestens ein Teil des Verbindungselements (10; 10'; 22; 334", 336"; 358) an mindestens einen Teil der Oberfläche des Verschleißteils so gepresst wurde, dass eine Oberfläche (12; 12') des Verbindungselements (10; 10'; 22; 334", 336"; 358), die zu einer Oberfläche des Verschleißteils (2; 2'; 18; 18'; 18‴; 18^{iv}; 18^{v}; 18^{vi};18^{vii}; 18^{viii}; 18^{ix}; 18⁶; 18⁷; 152; 74; 320", 322"; 350, 352) weist, dem Profil des Teils der Oberfläche des Verschleißteils (2; 2'; 18; 18'; 18‴; 18^{iv}; 18^{v}; 18^{vi}; 18^{vii}; 18^{viii}; 18^{ix}; 18⁶; 18⁷; 152; 74; 320", 322"; 350, 352) folgt, an den es gepresst wurde, wodurch die Oberflächen des Verschleißteils (2; 2'; 18; 18'; 18‴; 18^{iv}; 18^{v}; 18^{vi}; 18^{vii}; 18^{viii}; 18^{ix}; 18⁶; 18⁷; 152; 74; 320", 322"; 350, 352) und des Verbindungselements (10; 10'; 22; 334", 336"; 358) so zusammenwirkend geformt sind, dass Relativbewegung zwischen den beiden Teilen mindestens im Betrieb der Werkzeugkomponente im Wesentlichen verhindert ist; und wobei nicht nur die Oberfläche des Verbindungselements (10; 10'; 22; 334", 336"; 358), die zum Verschleißteil (2; 2'; 18; 18'; 18‴; 18^{iv}; 18^{v}; 18^{vi}; 18^{vii}; 18^{viii}; 18^{ix}; 18⁶; 18⁷; 152; 74; 320", 322"; 350, 352) weist, dem Profil des Verschleißteils (2; 2'; 18; 18'; 18‴; 18^{iv}; 18^{v}; 18^{vi}; 18^{vii}; 18^{viii}; 18^{ix}; 18⁶; 18⁷; 152; 74; 320", 322"; 350, 352) folgt, sondern auch die entgegengesetzte Oberfläche des Verbindungselements (10; 10'; 22; 334", 336"; 358);
**dadurch gekennzeichnet, dass** das Verhältnis der Dicke des Verbindungselements (10; 10'; 22; 334", 336"; 358) zur Dicke des darunter liegenden Verschleißteils (2; 2'; 18; 18'; 18‴; 18^{iv}; 18^{v}; 18^{vi}; 18^{vii}; 18^{viii}; 18^{ix}; 18⁶; 18⁷; 152; 74; 320", 322"; 350, 352) in der Messung an jedem Punkt höchstens 1:10 beträgt; wobei das Verschleißteil (2; 2'; 18; 18'; 18‴; 18^{iv}; 18^{v}; 18^{vi}; 18^{vii}; 18^{viii}; 18^{ix}; 18⁶; 18⁷; 152; 74; 320", 322"; 350, 352) im Wesentlichen zylindrisch ist, wobei das Verschleißteil eine Oberfläche aufweist, die über eine oder mehrere Vertiefungen (8; 8'; 20; 27^{iv}; 27^{vi}, 29^{vi}; 29^{viii}, 31^{viii}; 27^{ix}, 29^{ix}; 20⁶, 24⁶; 20⁷, 24⁷; 122; 75; 356) darin verfügt, wobei die eine oder die mehreren Vertiefungen eine oder mehrere Ringnuten (8; 8'; 20; 27^{iv}; 27^{vi}, 29^{vi}; 29^{viii}, 31^{viii}; 27^{ix}, 29^{ix}; 20⁶, 24⁶; 20⁷, 24⁷; 122; 75; 356) aufweisen, die sich um das im Wesentlichen zylindrische Verschleißteil erstrecken; wobei mindestens ein Teil des Verbindungselements (10; 10'; 22; 334", 336"; 358) an mindestens einen Teil der Oberfläche des Verschleißteils (2; 2'; 18; 18'; 18‴; 18^{iv}; 18^{v}; 18^{vi}; 18^{vii}; 18^{viii}; 18^{ix}; 18⁶; 18⁷; 152; 74; 320", 322"; 350, 352) gepresst wurde, der über die eine oder die mehreren Vertiefungen (8; 8'; 20; 27^{iv}; 27^{vi}, 29^{vi}; 29^{viii}, 31^{viii}; 27^{ix}, 29^{ix}; 20⁶, 24⁶; 20⁷, 24⁷; 122; 75; 356) darin verfügt; und wobei das Verschleißteil (2; 2'; 18; 18'; 18‴; 18^{iv}; 18^{v}; 18^{vi}; 18^{vii}; 18^{viii}; 18^{ix}; 18⁶; 18⁷; 152; 74; 320", 322"; 350, 352) ein Keramikmaterial, ein Cermet-Material oder ein superhartes Material oder einen Verbundstoff aus einem Keramik- und einem superharten Material oder einem Cermet- und einem superharten Material aufweist.

2. Werkzeugkomponente nach Anspruch 1, wobei das Verbindungselement (10; 10'; 22; 334", 336"; 358) an mindestens einen Teil der Oberfläche des Verschleißteils (2; 2'; 18; 18'; 18‴; 18^{iv}; 18^{v}; 18^{vi}; 18^{vii}; 18^{viii}; 18^{ix}; 18⁶; 18⁷; 152; 74; 320", 322"; 350, 352) isostatisch gepresst wurde, der die eine oder die mehreren Vertiefungen (8; 8'; 20; 27^{iv}; 27^{vi}, 29^{vi}; 29^{viii}, 31^{viii}; 27^{ix}, 29^{ix}; 20⁶, 24⁶; 20⁷, 24⁷; 122; 75; 356) aufweist.

3. Werkzeugkomponente nach Anspruch 1 oder 2, wobei das Verbindungselement (10; 10'; 22; 334", 336"; 358) im Wesentlichen napfförmig ist, wobei die Basis des Napfs an der Basis des zylindrischen Verschleißteils (2; 2'; 18; 18'; 18‴; 18^{iv}; 18^{v}; 18^{vi}; 18^{vii}; 18^{viii}; 18^{ix}; 18⁶; 18⁷; 152; 74; 320", 322"; 350, 352) aufsitzt und sich die Seiten des Napfs mindestens teilweise am zylindrischen Verschleißteil nach oben erstrecken, wobei die Seiten des Napfs das Profil der Nuten (8; 8'; 20; 27^{iv}; 27^{vi}, 29^{vi}; 29^{viii}, 31^{viii}; 27^{ix}, 29^{ix}; 20⁶, 24⁶; 20⁷, 24⁷; 122; 75; 356) darin abdecken und ihm folgen.

4. Werkzeugkomponente nach Anspruch 3, wobei das napfförmige Verbindungselement (10; 10'; 22; 334", 336"; 358) ein Metall oder eine Legierung aufweist, das bzw. die um das Verschleißteil (2; 2'; 18; 18'; 18‴; 18^{iv}; 18^{v}; 18^{vi}; 18^{vii}; 18^{viii}; 18^{ix}; 18⁶; 18⁷; 152; 74; 320", 322"; 350, 352) gezogen wurde, und die Seiten des Napfs in Kontakt mit den gekrümmten Seiten des Verschleißteils (2; 2'; 18; 18'; 18‴; 18^{iv}; 18^{v}; 18^{vi}; 18^{vii}; 18^{viii}; 18^{ix}; 18⁶; 18⁷; 152; 74; 320", 322"; 350, 352) so isostatisch gepresst wurden, dass sie dem Profil der Nuten (8; 8'; 20; 27^{iv}; 27^{vi}, 29^{vi}; 29^{viii}, 31^{viii}; 27^{ix}, 29^{ix}; 20⁶, 24⁶; 20⁷, 24⁷; 122; 75; 356) darin folgen.

5. Werkzeugkomponente nach einem der vorstehenden Ansprüche, wobei das Verschleißteil (2; 2'; 18; 18'; 18‴; 18^{iv}; 18^{v}; 18^{vi}; 18^{vii}; 18^{viii}; 18^{ix}; 18⁶; 18⁷; 152; 74; 320", 322"; 350, 352) die Form eines Rundrings (18; 18'; 18‴; 18^{iv}; 18^{v}; 18^{vi}; 18^{vii}; 18^{viii}; 18^{ix}; 18⁶; 18⁷; 152) hat, wobei der Rundring (18; 18'; 18‴; 18^{iv}; 18^{v}; 18^{vi}; 18^{vii}; 18^{viii}; 18^{ix}; 18⁶; 18⁷; 152) eine gekrümmte Außen- und Innenfläche sowie zwei im Wesentlichen flache Endflächen hat, und das Verbindungselement (22) auch die Form eines Rundrings hat, wobei das ringförmige Verbindungselement (22) das ringförmige Verschleißteil (2; 2'; 18; 18'; 18‴; 18^{iv}; 18^{v}; 18^{vi}; 18^{vii}; 18^{viii}; 18^{ix}; 18⁶; 18⁷; 152) umgibt, oder umgekehrt.

6. Werkzeugkomponente nach einem der vorstehenden Ansprüche, wobei das Verschleißteil (2; 2'; 18; 18'; 18‴; 18^{iv}; 18^{v}; 18^{vi}; 18^{vii}; 18^{viii}; 18^{ix}; 18⁶; 18⁷; 152; 74; 320", 322"; 350, 352) ein superhartes/Keramik-Verbundmaterial aufweist und die superharte Komponente Diamantmaterial ist und die Keramikkomponente Siliziumcarbid ist.

7. Werkzeugkomponente nach einem der vorstehenden Ansprüche, die ein Düseneinsatz (70) ist, der eine Bohrung für Fluid enthält, oder wobei das Verschleißteil der Werkzeugkomponente ein verschleißfester Pickel ist oder wobei das Verschleißteil ein Lager in einer Bohr- oder Schneidausrüstung bildet.

8. Werkzeug mit einer Werkzeugkomponente nach einem der vorstehenden Ansprüche, die in einem Werkzeugkörper über das Verbindungselement (10; 10'; 22; 334", 336"; 358) befestigt ist.

9. Verfahren zur Herstellung einer Werkzeugkomponente durch Zusammenfügen (1) eines Verschleißteils (2; 2'; 18; 18'; 18‴; 18^{iv}; 18^{v}; 18^{vi}; 18^{vii}; 18^{viii}; 18^{ix}; 18⁶; 18⁷; 152; 74; 320", 322"; 350, 352) mit einer Härte von mindestens 15 GPa mit (ii) einem Verbindungselement (10; 10'; 22; 334", 336"; 358), das ein Metall oder eine Legierung mit einer Härte von weniger als 15 GPa aufweist und die Form eines Bahnenmaterials hat oder ein zylindrisches Teil ist; wobei das Zusammenführen durch Pressen des Metallverbindungselements (10; 10'; 22; 334", 336"; 358) an das Verschleißteil (2; 2'; 18; 18'; 18‴; 18^{iv}; 18^{v}; 18^{vi}; 18^{vii}; 18^{viii}; 18^{ix}; 18⁶; 18⁷; 152; 74; 322"; 350, 352) so durchgeführt wird, dass das Verbindungselement (10; 10'; 22; 334", 336"; 358) eine Schicht über mindestens einem Teil des Verschleißteils (2; 2'; 18; 18'; 18‴; 18^{iv}; 18^{v}; 18^{vi}; 18^{vii}; 18^{viii}; 18^{ix}; 18⁶; 18⁷; 152; 74; 320", 322"; 350, 352) so bildet, dass eine Oberfläche (12; 12') des Verbindungselements (10; 10'; 22; 334", 336"; 358), die zu einer Oberfläche des Verschleißteils (2; 2'; 18; 18`; 18‴; 18^{iv}; 18^{v}; 18^{vi}; 18^{vii}; 18^{viii}; 18^{ix}; 18⁶; 18⁷; 152; 74; 320", 322"; 350, 352) weist, dem Profil des Teils der Oberfläche des Verschleißteils (2; 2'; 18; 18'; 18‴; 18^{iv}; 18^{v}; 18^{vi}; 18^{vii}; 18^{viii}; 18^{ix}; 18⁶; 18⁷; 152; 74; 320", 322"; 350, 352) folgt, an den es gepresst wurde, wodurch die Oberflächen des Verschleißteils (2; 2'; 18; 18'; 18‴; 18^{iv}; 18^{v}; 18^{vi};18^{vii};18^{viii}; 18^{ix}; 18⁶; 18⁷; 152; 74; 320", 322"; 350, 352) und des Verbindungselements (10; 10'; 22; 334", 336"; 358) so zusammenwirkend geformt werden, dass Relativbewegung zwischen den beiden Teilen mindestens im Betrieb der Werkzeugkomponente im Wesentlichen verhindert ist; und wobei nicht nur die Oberfläche (12; 12') des Verbindungselements (10; 10'; 22; 334", 336"; 358), die zum Verschleißteil (2; 2'; 18; 18'; 18‴; 18^{iv}; 18^{v}; 18^{vi}; 18^{vii}; 18^{viii}; 18^{ix}; 18⁶; 18⁷; 152; 74; 320", 322"; 350, 352) weist, dem Profil des Verschleißteils (2; 2'; 18; 18'; 18‴; 18^{iv}; 18^{v}; 18^{vi}; 18^{vii}; 18^{viii}; 18^{ix}; 18⁶; 18⁷; 152; 74; 320", 322"; 350, 352) folgt, sondern auch die entgegengesetzte Oberfläche des Verbindungselements (10; 10'; 22; 334", 336"; 358); **dadurch gekennzeichnet, dass** das Verhältnis der Dicke des Verbindungselements (10; 10'; 22; 334", 336"; 358) zur Dicke des darunter liegenden Verschleißteils (2; 2'; 18; 18'; 18‴; 18^{iv}; 18^{v}; 18^{vi}; 18^{vii}; 18^{viii}; 18^{ix}; 18⁶; 18⁷; 152; 74; 320", 322"; 350, 352) in der Messung an jedem Punkt höchstens 1:10 beträgt; wobei das Verschleißteil (2; 2'; 18; 18'; 18‴; 18^{iv}; 18^{v}; 18^{vi}; 18^{vii}; 18^{viii}; 18^{ix}; 18⁶; 18⁷; 152; 74; 320", 322"; 350, 352) im Wesentlichen zylindrisch ist, wobei das Verschleißteil eine Oberfläche aufweist, die über eine oder mehrere Vertiefungen (8; 8'; 20; 27^{iv}; 27^{vi}, 29^{vi}; 29^{viii}, 31^{viii}; 27^{ix}, 29^{ix}; 20⁶, 24⁶; 20⁷, 24⁷; 122; 75; 356) darin verfügt, wobei die eine oder die mehreren Vertiefungen eine oder mehrere Ringnuten (8; 8'; 20; 27^{iv}; 27^{vi}, 29^{vi}; 29^{viii}, 31^{viii}; 27^{ix}, 29^{ix}; 20⁶, 24⁶; 20⁷, 24⁷; 122; 75; 356) aufweisen, die sich um das im Wesentlichen zylindrische Verschleißteil erstrecken; und wobei mindestens ein Teil des Verbindungselements (10; 10'; 22; 334", 336"; 358) an mindestens einen Teil der Oberfläche des Verschleißteils (2; 2'; 18; 18'; 18‴; 18^{iv}; 18^{v}; 18^{vi}; 18^{vii}; 18^{viii}; 18^{ix}; 18⁶; 18⁷; 152; 74; 320", 322"; 350, 352) gepresst wurde, der über die eine oder die mehreren Vertiefungen (8; 8'; 20; 27^{iv}; 27^{vi}, 29^{vi}; 29^{viii}, 31^{viii}; 27^{ix}, 29^{ix}; 20⁶, 24⁶; 20⁷, 24⁷; 122; 75; 356) darin verfügt; und wobei das Verschleißteil (2; 2'; 18; 18'; 18‴; 18^{iv}; 18^{v}; 18^{vi}; 18^{vii}; 18^{viii}; 18^{ix}; 18⁶; 18⁷; 152; 74; 320", 322"; 350, 352) ein Keramikmaterial, ein Cermet-Material oder ein superhartes Material oder einen Verbundstoff aus einem Keramik- und einem superharten Material oder einem Cermet- und einem superharten Material aufweist.

10. Segmentierte Werkzeugkomponente, von der jedes Segment eine Werkzeugkomponente nach einem der Ansprüche 1 bis 6 aufweist, wobei jedes Segment ein Verschleißteil (320", 322"; 350, 352) und ein Verbindungselement (334", 336"; 358) aufweist, die auf die in einem der Ansprüche 1 bis 7 festgelegte Weise relativ zueinander angeordnet sind, und die Verbindungselemente (334", 336"; 358) benachbarter Segmente aneinander befestigt sind, wodurch die Verschleißteile (320", 322"; 350, 352) benachbarter Segmente aneinander befestigt sind.

11. Verfahren nach Anspruch 9 zur Herstellung einer Werkzeugkomponente, wobei die Werkzeugkomponente segmentiert ist, jedes Segment (320", 322"; 350, 352) ein Verschleißteil und ein Verbindungselement (334", 336"; 358) aufweist, die auf die in einem der Ansprüche 1 bis 6 oder einem der Ansprüche 9 bis 10 festgelegte Weise relativ zueinander angeordnet sind, wobei das Verfahren zusätzlich das Befestigen von Verbindungselementen (334", 336"; 358) benachbarter Segmente aneinander aufweist, wodurch die Verschleißteile (320", 322"; 350, 352) benachbarter Segmente aneinander befestigt werden.

## Revendications

1. Composant d'outil comportant une pièce d'usure (2 ; 2' ; 18 ; 18' ; 18‴ ; 18^{iv} ; 18^{v} ; 18^{vi} ; 18^{vii} ; 18^{viii} ; 18^{ix} ; 18⁶ ; 18⁷ ; 152 ; 74 ; 320" ; 322" ; 350, 352) qui est recouverte au moins en partie d'un élément de liaison (10 ; 10' ; 22 ; 334", 336" ; 358), la pièce d'usure (2 ; 2' ; 18 ; 18' ; 18‴ ; 18^{iv} ; 18^{v} ; 18^{vi} ; 18^{vii} ; 18^{viii} ; 18^{ix} ; 18⁶ ; 18⁷ ; 152 ; 74 ; 320" ; 322" ; 350, 352) ayant une dureté d'au moins 15 GPa, et l'élément de liaison (10 ; 10' ; 22 ; 334", 336" ; 358) comporte un métal ou un alliage, l'élément de liaison ayant une dureté inférieure à 15 GPa, l'élément de liaison (10 ; 10' ; 22 ; 334", 336" ; 358) ayant la forme d'une feuille ou étant une pièce cylindrique, et l'élément de liaison (10 ; 10' ; 22 ; 334", 336" ; 358) fournissant une couche sur au moins une partie de la pièce d'usure, au moins une partie de l'élément de liaison (10 ; 10' ; 22 ; 334", 336" ; 358) ayant été pressée contre au moins une partie de la surface de la pièce d'usure de telle sorte qu'une surface (12 ; 12') de l'élément de liaison (10 ; 10' ; 22 ; 334", 336" ; 358) qui est dirigée vers une surface de la pièce d'usure suit le profil de ladite partie de la surface de la pièce d'usure (2 ; 2' ; 18 ; 18' ; 18‴ ; 18^{iv} ; 18^{v} ; 18^{vi} ; 18^{vii} ; 18^{viii} ; 18^{ix} ; 18⁶ ; 18⁷ ; 152 ; 74 ; 320" ; 322" ; 350, 352) contre laquelle elle a été pressée, en sorte que les surfaces de la pièce d'usure (2 ; 2' ; 18 ; 18' ; 18‴ ; 18^{iv} ; 18^{v} ; 18^{vi} ; 18^{vii} ; 18^{viii} ; 18^{ix} ; 18⁶ ; 18⁷ ; 152 ; 74 ; 320" ; 322" ; 350, 352) et de l'élément de liaison (10 ; 10' ; 22 ; 334", 336" ; 358) sont formées en coopération de telle sorte qu'un mouvement relatif entre les deux parties est pratiquement empêché au moins pendant le fonctionnement du composant d'outil, et dans lequel non seulement la surface de l'élément de liaison (10 ; 10' ; 22 ; 334", 336" ; 358) qui est dirigée vers la pièce d'usure (2 ; 2' ; 18 ; 18' ; 18‴ ; 18^{iv} ; 18^{v} ; 18^{vi} ; 18^{vii} ; 18^{viii} ; 18^{ix} ; 18⁶ ; 18⁷ ; 152 ; 74 ; 320" ; 322" ; 350, 352) suit le profil de la pièce d'usure (2 ; 2' ; 18 ; 18' ; 18‴ ; 18^{iv} ; 18^{v} ; 18^{vi} ; 18^{vii} ; 18^{viii} ; 18^{ix} ; 18⁶ ; 18⁷ ; 152 ; 74 ; 320" ; 322" ; 350, 352) mais aussi la surface opposée de l'élément de liaison (10 ; 10' ; 22 ; 334", 336" ; 358),
**caractérisé en ce que** le rapport de l'épaisseur de l'élément de liaison (10 ; 10' ; 22 ; 334", 336" ; 358) sur l'épaisseur de la pièce d'usure (2 ; 2' ; 18 ; 18' ; 18‴ ; 18^{iv} ; 18^{v} ; 18^{vi} ; 18^{vii} ; 18^{viii} ; 18^{ix} ; 18⁶ ; 18⁷ ; 152 ; 74 ; 320" ; 322" ; 350, 352) qui lui est sous-jacente, mesurées en tout point étant au plus de 1:10, dans lequel la pièce d'usure (2 ; 2' ; 18 ; 18' ; 18‴ ; 18^{iv} ; 18^{v} ; 18^{vi} ; 18^{vii} ; 18^{viii} ; 18^{ix} ; 18⁶ ; 18⁷ ; 152 ; 74 ; 320" ; 322" ; 350, 352) est sensiblement cylindrique, la pièce d'usure comportant une surface qui inclut un ou plusieurs creux (8 ; 8' ; 20 ; 27^{iv}, 27^{vi}, 29^{vi}, 29^{viii}, 31^{viii}, 27^{ix}, 29^{ix}, 20⁶, 24⁶ ; 20⁷, 24⁷ ; 122 ; 75 ; 356) dans celle-ci, le ou les creux comportant une ou plusieurs gorges annulaires (8 ; 8' ; 20 ; 27^{iv}, 27^{vi}, 29^{vi}, 29^{viii}, 31^{viii}, 27^{ix}, 29^{ix}, 20⁶, 24⁶ ; 20⁷, 24⁷ ; 122 ; 75 ; 356) s'étendant autour de la pièce d'usure sensiblement cylindrique, dans lequel au moins une partie de l'élément de liaison (10 ; 10' ; 22 ; 334", 336" ; 358) ayant été pressée contre au moins une partie de la surface de la pièce d'usure (2 ; 2' ; 18 ; 18' ; 18‴ ; 18^{iv} ; 18^{v} ; 18^{vi} ; 18^{vii} ; 18^{viii} ; 18^{ix} ; 18⁶ ; 18⁷ ; 152 ; 74 ; 320" ; 322" ; 350, 352) qui inclut le ou les creux (8 ; 8' ; 20 ; 27^{iv}, 27^{vi}, 29^{vi}, 29^{viii}, 31^{viii}, 27^{ix}, 29^{ix}, 20⁶, 24⁶ ; 20⁷, 24⁷ ; 122 ; 75 ; 356) dans celle-ci, et dans lequel la pièce d'usure (2 ; 2' ; 18 ; 18' ; 18‴ ; 18^{iv} ; 18^{v} ; 18^{vi} ; 18^{vii} ; 18^{viii} ; 18^{ix} ; 18⁶ ; 18⁷ ; 152 ; 74 ; 320" ; 322" ; 350, 352) comporte une céramique, un cermet ou un matériau extra-dur ou un composite constitué d'une céramique et d'un matériau extra-dur, ou un cermet et un matériau extra-dur.

2. Composant d'outil selon la revendication 1, dans lequel l'élément de liaison (10 ; 10' ; 22 ; 334", 336" ; 358) a été pressé de manière isostatique contre au moins une partie de la surface de la pièce d'usure (2 ; 2' ; 18 ; 18' ; 18‴ ; 18^{iv} ; 18^{v} ; 18^{vi} ; 18^{vii} ; 18^{viii} ; 18^{ix} ; 18⁶ ; 18⁷ ; 152 ; 74 ; 320" ; 322" ; 350, 352) qui inclut le ou les creux (8 ; 8' ; 20 ; 27^{iv}, 27^{vi}, 29^{vi}, 29^{viii}, 31^{viii}, 27^{ix}, 29^{ix}, 20⁶, 24⁶ ; 20⁷, 24⁷ ; 122 ; 75 ; 356).

3. Composant d'outil selon l'une quelconque des revendications 1 ou 2, dans lequel l'élément de liaison (10 ; 10' ; 22 ; 334", 336" ; 358) est sensiblement en forme de cuvette, la base de la cuvette étant en appui contre la base de la pièce d'usure cylindrique (2 ; 2' ; 18 ; 18' ; 18‴ ; 18^{iv} ; 18^{v} ; 18^{vi} ; 18^{vii} ; 18^{viii} ; 18^{ix} ; 18⁶ ; 18⁷ ; 152 ; 74 ; 320" ; 322" ; 350, 352), et les côtés de la cuvette s'étendant au moins en partie jusqu'à la pièce d'usure cylindrique, les côtés de la cuvette recouvrant et suivant le profil desdites gorges (8 ; 8' ; 20 ; 27^{iv}, 27^{vi}, 29^{vi}, 29^{viii}, 31^{viii}, 27^{ix}, 29^{ix}, 20⁶, 24⁶ ; 20⁷, 24⁷ ; 122 ; 75 ; 356) dans celle-ci.

4. Composant d'outil selon la revendication 3, dans lequel l'élément de liaison en forme de cuvette (10 ; 10' ; 22 ; 334", 336" ; 358) comporte un métal ou un alliage qui a été étiré autour de la pièce d'usure (2 ; 2' ; 18 ; 18' ; 18‴ ; 18^{iv} ; 18^{v} ; 18^{vi} ; 18^{vii} ; 18^{viii} ; 18^{ix} ; 18⁶ ; 18⁷ ; 152 ; 74 ; 320" ; 322" ; 350, 352), et les côtés de la cuvette ont été pressés de manière isostatique pour venir en contact avec les côtés incurvés de la pièce d'usure (2 ; 2' ; 18 ; 18' ; 18‴ ; 18^{iv} ; 18^{v} ; 18^{vi} ; 18^{vii} ; 18^{viii} ; 18^{ix} ; 18⁶ ; 18⁷ ; 152 ; 74 ; 320" ; 322" ; 350, 352) pour suivre le profil des gorges (8 ; 8' ; 20 ; 27^{iv}, 27^{vi}, 29^{vi}, 29^{viii}, 31^{viii}, 27^{ix}, 29^{ix}, 20⁶, 24⁶ ; 20⁷, 24⁷ ; 122 ; 75 ; 356) dans celle-ci.

5. Composant d'outil selon l'une quelconque des revendications précédentes, dans lequel la pièce d'usure (2 ; 2' ; 18 ; 18' ; 18"' ; 18^{iv} ; 18^{v} ; 18^{vi} ; 18^{vii} ; 18^{viii} ; 18^{ix} ; 18⁶ ; 18⁷ ; 152 ; 74 ; 320" ; 322" ; 350, 352) a la forme d'un anneau (18 ; 18' ; 18"' ; 18^{iv} ; 18^{v} ; 18^{vi} ; 18^{vii} ; 18^{viii} ; 18^{ix} ; 18⁶ ; 18⁷ ; 152), l'anneau (18 ; 18' ; 18"' ; 18^{iv} ; 18^{v} ; 18^{vi} ; 18^{vii} ; 18^{viii} ; 18^{ix} ; 18⁶ ; 18⁷ ; 152) ayant des surfaces extérieures et intérieures incurvées et deux faces d'extrémité sensiblement plates, et l'élément de liaison (22) a également la forme d'un anneau, l'élément de liaison annulaire (22) entourant la pièce d'usure annulaire (2 ; 2' ; 18 ; 18' ; 18"' ; 18^{iv} ; 18^{v} ; 18^{vi} ; 18^{vii} ; 18^{viii} ; 18^{ix} ; 18⁶ ; 18⁷ ; 152 ; 74 ; 320" ; 322" ; 350, 352), ou vice versa.

6. Composant d'outil selon l'une quelconque des revendications précédentes, dans lequel la pièce d'usure (2 ; 2' ; 18 ; 18' ; 18"' ; 18^{iv} ; 18^{v} ; 18^{vi} ; 18^{vii} ; 18^{viii} ; 18^{ix} ; 18⁶ ; 18⁷ ; 152 ; 74 ; 320" ; 322" ; 350, 352) comporte un composite de matériau extra-dur/céramique, et le composant extra-dur est un diamant, et le composant céramique est du carbure de silicium.

7. Composant d'outil selon l'une quelconque des revendications précédentes, qui est un insert de buse (70) contenant un alésage pour du fluide, ou dans lequel ladite pièce d'usure du composant d'outil est un pic résistant à l'usure, ou dans lequel ladite pièce d'usure fournit un palier à l'intérieur d'un équipement de forage ou de coupe.

8. Outil comportant un composant d'outil selon l'une quelconque des revendications précédentes fixé à l'intérieur d'un corps d'outil via l'élément de liaison (10 ; 10' ; 22 ; 334", 336" ; 358).

9. Procédé de fabrication d'un composant d'outil en assemblant (i) une pièce d'usure (2 ; 2' ; 18 ; 18' ; 18‴ ; 18^{iv} ; 18^{v} ; 18^{vi} ; 18^{vii} ; 18^{viii} ; 18^{ix} ; 18⁶ ; 18⁷ ; 152 ; 74 ; 320" ; 322" ; 350, 352) ayant une dureté d'au moins 15 GPa à (ii) un élément de liaison (10 ; 10' ; 22 ; 334", 336" ; 358) comportant un métal ou un alliage ayant une dureté inférieure à 15 GPa et ayant la forme d'une feuille ou étant une pièce cylindrique, l'assemblage étant réalisé en pressant l'élément de liaison métallique (10 ; 10' ; 22 ; 334", 336" ; 358) contre la pièce d'usure (2 ; 2' ; 18 ; 18' ; 18"' ; 18^{iv} ; 18^{v} ; 18^{vi} ; 18^{vii} ; 18^{viii} ; 18^{ix} ; 18⁶ ; 18⁷ ; 152 ; 74 ; 320" ; 322" ; 350, 352) de sorte que l'élément de liaison (10 ; 10' ; 22 ; 334", 336" ; 358) fournit une couche sur au moins une partie de la pièce d'usure (2 ; 2' ; 18 ; 18' ; 18"' ; 18^{iv} ; 18^{v} ; 18^{vi} ; 18^{vii} ; 18^{viii} ; 18^{ix} ; 18⁶ ; 18⁷ ; 152 ; 74 ; 320" ; 322" ; 350, 352) de telle sorte qu'une surface (12 ; 12') de l'élément de liaison (10 ; 10' ; 22 ; 334", 336" ; 358) qui est dirigée vers une surface de la pièce d'usure (2 ; 2' ; 18 ; 18' ; 18‴ ; 18^{iv} ; 18^{v} ; 18^{vi} ; 18^{vii} ; 18^{viii} ; 18^{ix} ; 18⁶ ; 18⁷ ; 152 ; 74 ; 320" ; 322" ; 350, 352) suit le profil de ladite partie de la surface de la pièce d'usure (2 ; 2' ; 18 ; 18' ; 18"' ; 18^{iv} ; 18^{v} ; 18^{vi} ; 18^{vii} ; 18^{viii} ; 18^{ix} ; 18⁶ ; 18⁷ ; 152 ; 74 ; 320" ; 322" ; 350, 352) contre laquelle elle a été pressée, en sorte que les surfaces de la pièce d'usure (2 ; 2' ; 18 ; 18' ; 18"' ; 18^{iv} ; 18^{v} ; 18^{vi} ; 18^{vii} ; 18^{viii} ; 18^{ix} ; 18⁶ ; 18⁷ ; 152 ; 74 ; 320" ; 322" ; 350, 352) et de l'élément de liaison (10 ; 10' ; 22 ; 334", 336" ; 358) sont formées en coopération de telle sorte qu'un mouvement relatif entre les deux parties est sensiblement empêché au moins pendant le fonctionnement du composant d'outil, et dans lequel non seulement la surface (12 ; 12') de l'élément de liaison (10 ; 10' ; 22 ; 334", 336" ; 358) qui est dirigée vers la pièce d'usure (2 ; 2' ; 18 ; 18' ; 18"' ; 18^{iv} ; 18^{v} ; 18^{vi} ; 18^{vii} ; 18^{viii} ; 18^{ix} ; 18⁶ ; 18⁷ ; 152 ; 74 ; 320" ; 322" ; 350, 352) suit le profil de la pièce d'usure (2 ; 2' ; 18 ; 18' ; 18‴ ; 18^{iv} ; 18^{v} ; 18^{vi} ; 18^{vii} ; 18^{viii} ; 18^{ix} ; 18⁶ ; 18⁷ ; 152 ; 74 ; 320" ; 322" ; 350, 352) mais aussi la surface opposée de l'élément de liaison (10 ; 10' ; 22 ; 334", 336" ; 358), caractérisé ce que le rapport de l'épaisseur de l'élément de liaison (10 ; 10' ; 22 ; 334", 336" ; 358) sur l'épaisseur de la pièce d'usure (2 ; 2' ; 18 ; 18' ; 18"' ; 18^{iv} ; 18^{v} ; 18^{vi} ; 18^{vii} ; 18^{viii} ; 18^{ix} ; 18⁶ ; 18⁷ ; 152 ; 74 ; 320" ; 322" ; 350, 352) qui lui est sous-jacente, mesurées en tout point étant d'au plus 1:10,
dans lequel la pièce d'usure (2 ; 2' ; 18 ; 18' ; 18"' ; 18^{iv} ; 18^{v} ; 18^{vi} ; 18^{vii} ; 18^{viii} ; 18^{ix} ; 18⁶ ; 18⁷ ; 152 ; 74 ; 320" ; 322" ; 350, 352) est sensiblement cylindrique, la pièce d'usure comportant une surface qui inclut un ou plusieurs creux (8 ; 8' ; 20 ; 27^{iv}, 27^{vi}, 29^{vi}, 29^{viii}, 31^{viii}, 27^{ix}, 29^{ix}, 20⁶, 24⁶ ; 20⁷, 24⁷ ; 122 ; 75 ; 356) dans celle-ci, le ou les creux comportant une ou plusieurs gorges annulaires (8 ; 8' ; 20 ; 27^{iv}, 27^{vi}, 29^{vi}, 29^{viii}, 31^{viii}, 27^{ix}, 29^{ix}, 20⁶, 24⁶ ; 20⁷, 24⁷ ; 122 ; 75 ; 356) s'étendant autour de la pièce d'usure sensiblement cylindrique, et dans lequel au moins une partie de l'élément de liaison (10 ; 10' ; 22 ; 334", 336" ; 358) ayant été pressée contre au moins une partie de la surface de la pièce d'usure (2 ; 2' ; 18 ; 18' ; 18"' ; 18^{iv} ; 18^{v} ; 18^{vi} ; 18^{vii} ; 18^{viii} ; 18^{ix} ; 18⁶ ; 18⁷ ; 152 ; 74 ; 320" ; 322" ; 350, 352) qui inclut le ou les creux (8 ; 8' ; 20 ; 27^{iv}, 27^{vi}, 29^{vi}, 29^{viii}, 31^{viii}, 27^{ix}, 29^{ix}, 20⁶, 24⁶ ; 20⁷, 24⁷ ; 122 ; 75 ; 356) dans celle-ci, et dans lequel la pièce d'usure (2 ; 2' ; 18 ; 18' ; 18"' ; 18^{iv} ; 18^{v} ; 18^{vi} ; 18^{vii} ; 18^{viii} ; 18^{ix} ; 18⁶ ; 18⁷ ; 152 ; 74 ; 320" ; 322" ; 350, 352) comporte une céramique, un cermet ou un matériau extra-dur, ou un composite constitué d'une céramique et d'un matériau extra-dur, ou un cermet et un matériau extra-dur.

10. Composant d'outil segmenté, dont chaque segment comporte un composant d'outil selon l'une quelconque des revendications 1 à 6, chaque segment comportant une pièce d'usure (320", 322" ; 350, 352) et un élément de liaison (334", 336" ; 358) agencés l'un par rapport à l'autre selon la manière définie dans l'une quelconque des revendications 1 à 7, et les éléments de liaison (334", 336" ; 358) de segments adjacents étant fixés les uns aux autres, en fixant ainsi lesdites parties d'usure (320", 322" ; 350, 352) de segments adjacents les unes aux autres.

11. Procédé selon la revendication 9 pour fabriquer un composant d'outil, ledit composant d'outil étant segmenté, chaque segment (320", 322" ; 350, 352) comportant une pièce d'usure et un élément de liaison (334", 336" ; 358) agencés l'un par rapport à l'autre selon la manière définie dans l'une quelconque des revendications 1 à 6 ou l'une quelconque des revendications 9 à 10, le procédé comportant de plus la fixation d'éléments de liaison (334", 336" ; 358) de segments adjacents les uns aux autres, en fixant ainsi lesdites parties d'usure (320", 322" ; 350, 352) de segments adjacents les unes aux autres.
